(19)

Europäisches
Patentamt
European
Patent Office
Office européen
des brevets

(11)  **EP 4 539 588 A1**

(12)  # EUROPEAN PATENT APPLICATION
published in accordance with Art. 153(4) EPC

(43) Date of publication:
**16.04.2025 Bulletin 2025/16**

(21) Application number: **23872891.9**

(22) Date of filing: **15.09.2023**

(51) International Patent Classification (IPC):
$H04W\ 76/15^{(2018.01)}$    $H04W\ 28/02^{(2009.01)}$
$H04W\ 76/27^{(2018.01)}$    $H04L\ 43/0888^{(2022.01)}$
$H04W\ 84/12^{(2009.01)}$    $H04W\ 24/02^{(2009.01)}$

(52) Cooperative Patent Classification (CPC):
**H04L 43/0888; H04W 24/02; H04W 28/02;
H04W 76/15; H04W 76/27; H04W 84/12**

(86) International application number:
**PCT/KR2023/013942**

(87) International publication number:
**WO 2024/071773 (04.04.2024 Gazette 2024/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **26.09.2022  KR 20220121565
19.10.2022  KR 20220134573
26.01.2023  KR 20230010247**

(71) Applicant: **Samsung Electronics Co., Ltd.
Suwon-si, Gyeonggi-do 16677 (KR)**

(72) Inventors:
• **MIN, Hyunkee
Suwon-si, Gyeonggi-do 16677 (KR)**

• **PARK, Wonbin
Suwon-si, Gyeonggi-do 16677 (KR)**
• **YANG, Changmok
Suwon-si, Gyeonggi-do 16677 (KR)**
• **YUN, Jusik
Suwon-si, Gyeonggi-do 16677 (KR)**
• **CHOI, Seongsu
Suwon-si, Gyeonggi-do 16677 (KR)**
• **CHOI, Junsu
Suwon-si, Gyeonggi-do 16677 (KR)**
• **CHOI, Hyeonu
Suwon-si, Gyeonggi-do 16677 (KR)**

(74) Representative: **Gulde & Partner
Patent- und Rechtsanwaltskanzlei mbB
Berliner Freiheit 2
10785 Berlin (DE)**

(54)  **ELECTRONIC DEVICE FOR WIRELESS LAN COMMUNICATION, AND OPERATION METHOD THEREOF**

(57)  Various embodiments of the disclosure relate to a device and a method for wireless LAN communication in an electronic device. An electronic device may include a communication circuit and a processor, wherein the processor is configured to set up multiple links to an external electronic device, configure, to be an active link, at least one link among the multiple links, configure at least one other link to be an inactive link, transmit data to and/or receive data from the external electronic device via the active link, identify a radio signal state of the inactive link if it is determined to perform link switching, based on a radio signal state of the active link, and based on the radio signal states of the active link and the inactive link, reconfigure an active link and an inactive link of the multiple links. Other embodiments may also be possible.

**EP 4 539 588 A1**

**(Cont. next page)**

# FIG. 8

800

```
        ┌──────────────┐
        │    START     │
        └──────────────┘
               │
               ▼
┌─────────────────────────────────────────┐
│  IDENTIFY RADIO SIGNAL STATE OF ACTIVE LINK │   801
└─────────────────────────────────────────┘
               │
               ▼
         ◇─────────────◇
        ╱  SWITCH SERVICE  ╲        NO
  803 ◇      AREA?          ◇──────────────┐
        ╲                 ╱               │
         ◇───────┬───────◇               │
                 │ YES                   │
                 ▼                       │
┌─────────────────────────────────────────┐ │
│  IDENTIFY COMMUNICATION CIRCUIT OF INACTIVE LINK │  805
└─────────────────────────────────────────┘ │
                 │                       │
                 ▼                       │
┌─────────────────────────────────────────┐ │
│  IDENTIFY RADIO SIGNAL STATE OF INACTIVE LINK │  807
└─────────────────────────────────────────┘ │
                 │                       │
                 ▼                       │
┌─────────────────────────────────────────┐ │
│  RECONFIGURE ACTIVE LINK AND INACTIVE LINK │  809
└─────────────────────────────────────────┘ │
                 │                       │
                 ▼                       │
┌─────────────────────────────────────────┐ │
│  IDENTIFY EFFECTIVE LINK IN ACTIVE LINK │  811
└─────────────────────────────────────────┘ │
                 │                       │
                 ▼                       │
┌─────────────────────────────────────────┐ │
│  PERFORM WIRELESS LAN COMMUNICATION VIA │  813
│           EFFECTIVE LINK                │ │
└─────────────────────────────────────────┘ │
                 │                       │
                 ▼◄──────────────────────┘
        ┌──────────────┐
        │     END      │
        └──────────────┘
```

## Description

[Technical Field]

Various embodiments of the disclosure relate to an electronic device for wireless LAN communication and an operation method thereof.

[Background Art]

A wireless local area network (WLAN) system may support wireless connection of various electronic devices, such as a smartphone, a tablet personal computer (PC), or a notebook, by using a designated frequency band (e.g., about 2.4 GHz band, about 5 GHz band, and/or about 6 GHz band).
A wireless LAN system may be installed not only in a private space, such as a house, but also in a public space, such as an airport, a train station, an office, or a department store. A wireless LAN system may be defined in the institute of electrical and electronics engineers (IEEE) 802.11 standards. For example, the IEEE 802.11 standards are evolving into IEEE 802.11b, IEEE 802.11a, IEEE 802.11g, IEEE 802.11n, IEEE 802.11ac, IEEE 802.11ax, and IEEE 802.11be.

[Disclosure of Invention]

[Technical Problem]

A wireless LAN system may provide a multi-link operation (MLO) to improve a speed and reduce a delay time for data transmission and/or reception via wireless LAN communication. When supporting an MLO, an electronic device may transmit data to and/or receive data from an external electronic device (e.g., an access point (AP)) via multiple links.
If the number of links concurrently operable by an electronic device is less than the number of links (e.g., 3) set up with an external electronic device, the electronic device may transmit data to and/or receive data from the external electronic device via at least one link among multiple links set up with respect to the external electronic device. An electronic device needs a method for selecting at least one link from among multiple links to be used for wireless LAN communication with an external electronic device.
Various embodiments of the disclosure disclose a device and a method for selecting, by an electronic device, at least one link for wireless LAN communication from among multiple links to an external electronic device (e.g., an AP).
Technical tasks to be achieved in the document are not limited to the technical tasks mentioned above, and other technical tasks that are not mentioned may be clearly understood by those skilled in the art, based on the following descriptions.

[Solution to Problem]

According to various embodiments, an electronic device may include at least one communication circuit supporting wireless LAN communication, and a processor operatively connected to the communication circuit. According to an embodiment, the processor may set up multiple links with an external electronic device via the at least one communication circuit. According to an embodiment, via the at least one communication circuit, the processor may configure, to be an active link, at least one link among the multiple links and configure at least one other link to be an inactive link. According to an embodiment, the processor may transmit data to and/or receive data from the external electronic device via the active link. According to an embodiment, the processor may identify a radio signal state of the inactive link if it is determined to perform link switching, based on a radio signal state of the active link. According to an embodiment, based on the radio signal states of the active link and the inactive link, the processor may reconfigure an active link and an inactive link of the multiple links, and transmit data to and/or receive data from the external electronic device via the reconfigured active link.
According to various embodiments, an operation method of an electronic device may include setting up multiple links for wireless LAN communication with an external electronic device. According to an embodiment, the operation method of the electronic device may include configuring, to be an active link, at least one link among the multiple links and configuring at least one other link to be an inactive link. According to an embodiment, the operation method of the electronic device may include transmitting data to and/or receiving data from the external electronic device via the active link. According to an embodiment, the operation method of the electronic device may include identifying a radio signal state of the inactive link if it is determined to perform link switching, based on a radio signal state of the active link. According to an embodiment, the operation method of the electronic device may include, based on the radio signal states of the active link and the inactive link, reconfiguring an active link and an inactive link of the multiple links, and transmitting data to and/or receiving data from the external electronic device via the reconfigured active link.

According to various embodiments, a non-transitory computer-readable storage medium (or computer program product) storing one or more programs may be described. According to an embodiment, the one or more programs may include instructions for, when executed by a processor of an electronic device, setting up multiple links for wireless LAN communication with an external electronic device, configuring, to be an active link, at least one link among the multiple links and configuring at least one other link to be an inactive link, transmitting data to and/or receiving data from the external electronic device via the active link, identifying a radio signal state of the inactive link if it is determined to perform link switching, based on a radio signal state of the active link, reconfiguring, based on the radio signal states of the active link and the inactive link, an active link and an inactive link of the multiple links, and transmitting data to and/or receiving data from the external electronic device via the reconfigured active link.

[Advantageous Effects of Invention]

According to various embodiments of the disclosure, an electronic device may perform wireless LAN communication via at least one link selected based on radio signal states of respective multiple links to an external electronic device (e.g., access point (AP)), thereby reducing data transmission interruption or transmission delay.

The effects obtainable in various embodiments of the disclosure are not limited to the aforementioned effects, and other effects that are not mentioned may be clearly understood by those skilled in the art to which the disclosure belongs, from descriptions below.

[Brief Description of Drawings]

FIG. 1 is a block diagram of an electronic device in a network environment according to various embodiments;
FIG. 2 is an example of a multi-link operation (MLO) in a wireless LAN system according to various embodiments;
FIG. 3 is a block diagram of the electronic device supporting the MLO according to various embodiments;
FIG. 4 is a block diagram of a wireless LAN communication circuit supporting the MLO according to various embodiments;
FIG. 5 is a block diagram of a wireless LAN communication circuit supporting the MLO according to various embodiments;
FIG. 6 is a flowchart for configuring an active link in an electronic device according to various embodiments;
FIG. 7 is a flowchart for initial configuration of an active link in an electronic device according to various embodiments;
FIG. 8 is a flowchart for reconfiguring an active link in an electronic device according to various embodiments;
FIG. 9 is an example of a service area of each link in the wireless LAN system according to various embodiments;
FIG. 10 is a flowchart for performing wireless LAN communication via an effective link in an electronic device according to various embodiments; and
FIG. 11 is a flowchart for performing wireless LAN communication via at least a part of effective links in an electronic device according to various embodiments.

[Mode for the Invention]

Hereinafter, various embodiments will be described in detail with reference to accompanying drawings.

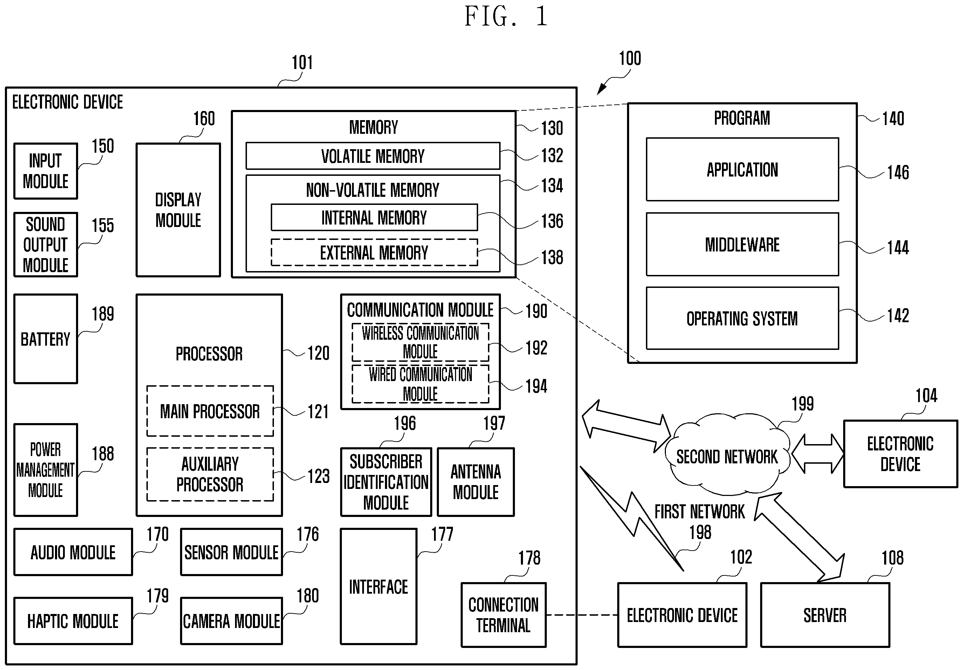

Fig. 1 is a block diagram illustrating an example electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth™, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC. According to an embodiment, the subscriber identification module 196 may include a plurality of subscriber identification modules. For example, the plurality of subscriber identification modules may store different subscriber information.

The antenna module 197 may transmit or receive a signal or power to or from the outside (e.g., the external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, a home appliance, or the like. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), the element may be coupled with the other element directly (e.g., wiredly), wirelessly, or via a third element.

As used in connection with various embodiments of the disclosure, the term "module" may include a unit implemented in hardware, software, or firmware, or any combination thereof, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the "non-transitory" storage medium is a tangible device, and may not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

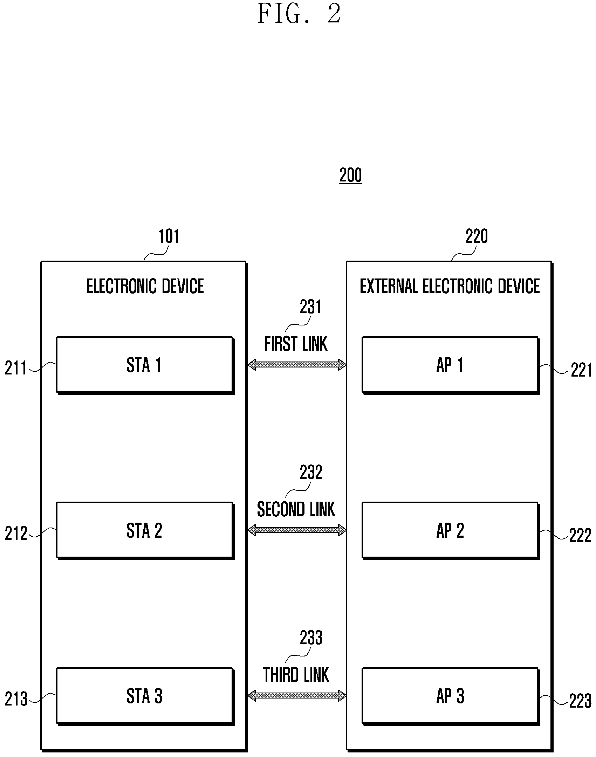

FIG. 2 is an example of a multi-link operation (MLO) in a wireless LAN system according to various embodiments. As an example, the electronic device 101 of FIG. 2 may be at least partially similar to the electronic device 101 of FIG. 1, or may include another embodiment of the electronic device.

According to various embodiments referring to FIG. 2, a wireless LAN system 200 may include the electronic device 101 and/or an external electronic device 220 (e.g., the electronic device 102 of FIG. 1). According to an embodiment, the electronic device 101 may perform wireless LAN communication with the external electronic device 220. For example, wireless LAN communication is a communication scheme defined in the IEEE 802.11 standards, and may include Wi-Fi. For example, the external electronic device 220 may serve as a base station that provides wireless LAN communication to at least one electronic device 101 located within a communication radius of the wireless LAN system 200. As an example, the external electronic device 220 may include an access point (AP) of IEEE 802.11. As an example, the external electronic device 220 may include multiple APs (e.g., AP1 221, AP2 222, and/or AP3 223) corresponding to multiple links (e.g., a first link 231, a second link 232, and/or a third link 233) to the electronic device 101. For example, the electronic device 101 may include a station (STA) of IEEE 802.11. As an example, the electronic device 101 may include multiple STAs (e.g., STA1 211, STA2 212, and/or STA3 213) corresponding to multiple links (e.g., the first link 231, the second link 232, and/or the third link 233) to the external electronic device 220.

According to various embodiments, the electronic device 101 and the external electronic device 220 may support a multi-link operation (MLO). The MLO may include a communication scheme for transmitting and/or receiving data (or packet) via multiple links (e.g., the first link 231, the second link 232, and/or the third link 233). As an example, the multiple links for the MLO may include different media access control (MAC) addresses. As an example, multiple STAs (e.g., STA1 211, STA2 212, and/or STA3 213) included in the electronic device 101 may have different MAC addresses. As an example, the electronic device 101 and the external electronic device 220 may perform wireless LAN communication using a single Internet protocol (IP) address.

According to various embodiments, when supporting the MLO, the electronic device 101 may perform wireless LAN communication with the external electronic device 220 via respective links (e.g., the first link 231, the second link 232, and/or the third link 233). According to an embodiment, the electronic device 101 (e.g., STA1 211) may transmit and/or receive data (or packet) to and/or from the external electronic device 220 via the first link 231. For example, data may be transmitted and/or received via a frequency band or channel corresponding to the first link 231. According to an embodiment, the electronic device 101 (e.g., STA2 212) may transmit data to and/or receive data from the external electronic device 220 via the second link 232. For example, data may be transmitted and/or received via a frequency band or channel corresponding to the second link 232. According to an embodiment, the electronic device 101 (e.g., STA3 213) may transmit data to and/or receive data from the external electronic device 220 via the third link 233. For example, data may be transmitted and/or received via a frequency band or channel corresponding to the third link 233.

According to various embodiments, when supporting the MLO, the external electronic device 220 may perform wireless LAN communication with the electronic device 101 via respective links (e.g., the first link 231, the second link 232, and/or the third link 233). According to an embodiment, the external electronic device 220 (e.g., AP1 221) may transmit and/or receive data (or packet) to and/or from the electronic device 101 via the first link 231. According to an embodiment, the external electronic device 220 (e.g., AP2 222) may transmit data to and/or receive data from the electronic device 101 via the second link 232. According to an embodiment, the external electronic device 220 (e.g., AP3 223) may transmit data to and/or receive data from the electronic device 101 via the third link 233.

According to various embodiments, frequency bands (or channels) of the first link 231, the second link 232, and the third link 233 may be configured differently. For example, the first link 231 may support a band of about 2.4 GHz, the second link 232 may support a band of about 5 GHz, and the third link 233 may support a band of about 6 GHz.

According to various embodiments, the first link 231, the second link 232, and/or the third link 233 may also be used by an external device other than the electronic device 101. As an example, the external device may include, other than the electronic device 101 and the external electronic device 220, another electronic device supporting wireless LAN communication. According to an embodiment, the electronic device 101 may support a carrier sense multiple access with collision avoidance (CSMA/CA) scheme so that the electronic device 101 and the external device concurrently use the same link and do not interfere with each other. For example, when supporting CSMA/CA, the electronic device 101 may identify whether the external device transmits data via a specific link (e.g., the first link 231, the second link 232, and/or the third link 233). When the electronic device 101 determines that the external device transmits data via a specific link, data transmission via the specific link may be restricted. For example, when the electronic device 101 determines that the external device does not transmit data via a specific link, the electronic device 101 may transmit data via the specific link according to a designated scheme. As an example, the designated scheme may include clear channel assessment (CCA). For example, the first link 231, the second link 232, and/or the third link 233 may independently support CSMA/CA.

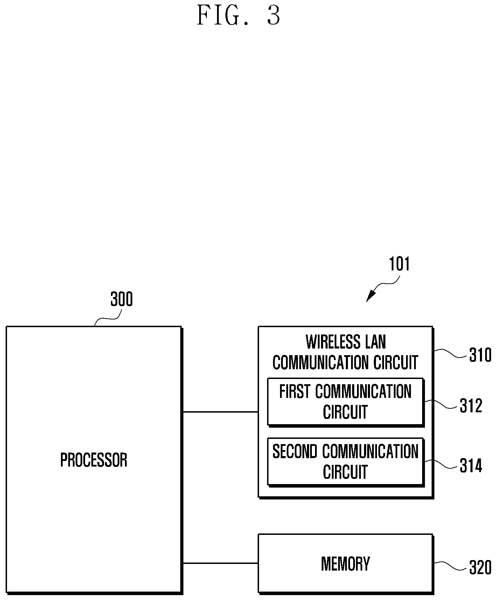

FIG. 3 is a block diagram of the electronic device supporting the MLO according to various embodiments. According to an embodiment, the electronic device 101 of FIG. 3 may be at least partially similar to the electronic device 101 of FIG. 1 or FIG. 2, or may include another embodiment of the electronic device.

According to various embodiments referring to FIG. 3, the electronic device 101 may include a processor 300, a wireless LAN communication circuit 310, and/or a memory 320. According to one embodiment, the processor 300 may be substantially the same as the processor 120 (e.g., an application processor) of FIG. 1 or may be included in the processor 120. The wireless LAN communication circuit 310 may be substantially the same as the wireless communication module 192 of FIG. 1 or may be included in the wireless communication module 192. The memory 320 may be substantially the same as the memory 130 of FIG. 1 or may be included in the memory 130. According to an embodiment, the processor 300 may be operatively, functionally, and/or electrically connected to the wireless LAN communication circuit 310 and/or the memory 320.

According to various embodiments, the wireless LAN communication circuit 310 may transmit and/or receive data (or packet) to and/or from at least one external electronic device (e.g., the external electronic device 220 of FIG. 2) via wireless LAN communication. According to an embodiment, the wireless LAN communication circuit 310 may include a first communication circuit 312 and/or a second communication circuit 314 which process a baseband signal for wireless LAN communication. According to an embodiment, the first communication circuit 312 and the second communication circuit 314 may perform wireless LAN communication via different links (or frequency bands or at least partially different frequency bands). For example, the first communication circuit 312 may support a first frequency band (e.g., a band of about 2.4 GHz) and/or a second frequency band (e.g., a band of about 5 GHz). For example, the second communication circuit 314 may support the second frequency band (e.g., a band of about 5 GHz) and/or a third frequency band (e.g., a band of about 6 GHz). For example, the first communication circuit 312 and the second communication circuit 314 may be logically (e.g., by software) distinguished. For example, the first communication circuit 312 and the second communication circuit 314 may include different circuits or different hardware.

According to various embodiments, the processor 300 may control the wireless LAN communication circuit 310 to set up multiple links (e.g., the first link 231, the second link 232, and/or the third link 233 of FIG. 2) to the external electronic device (e.g., the external electronic device of FIG. 2). According to an embodiment, the processor 300 may control the wireless LAN communication circuit 310 to set up multiple links to the external electronic device 220 via at least one link. For example, the processor 300 may acquire information on the MLO of the external electronic device 220 from a beacon or a probe response frame received via the first frequency band (or the first link 231) from the external electronic device 220. As an example, the information on the MLO may include not only information on the first frequency band (or the first link 231) in which the beacon or the probe response frame is received, but also information on the second frequency band (or the second link 232) and/or the third frequency band (or the third link 233) supportable for the MLO by the external electronic device 220. As an example, information on the frequency bands (or links) may include a basic service set identifier (BSSID) of each frequency band (or link) and/or a parameter related to the MLO. For example, the processor 300 may control the wireless LAN communication circuit 310 to transmit an association request frame related to multiple links to the external electronic device 220 via at least one link, based on the information related to the MLO of the external electronic device 220. As an example, the association request frame is information on the set-up of the first link 231, the second link 232, and/or the third link 233, and may include information on an operational parameter and/or capability of each link. For example, when information on acceptance is acquired from the external electronic device 220 in response to the association request frame, the processor 300 may determine that multiple links to the external electronic device 220 have been set up. For example, when information on rejection related to at least one link among multiple links is acquired from the external electronic device 220 in response to the association request frame, the processor 300 may determine that setting up of at least one link, which corresponds to the information on rejection, from among the multiple links to the external electronic device 220 has failed. As an example, at least one link corresponding to information on rejection may be excluded from the set-up of the links to the external electronic device 220.

According to an embodiment, the processor 300 may control the communication circuit 310 to set up links corresponding to at least some frequency bands (e.g., at least two frequency bands) among multiple frequency bands supportable for the MLO by the electronic device 101 and/or the external electronic device 220. For example, the processor 300 may control the communication circuit 310 to set up links corresponding to frequency bands in which a beacon or a probe response frame is received from the external electronic device 220. As an example, the number of links corresponding to at least some frequency bands may be configured based on the number of links concurrently operable by the electronic device 101 and/or the external electronic device 220.

For example, the processor 300 may identify radio signal states of the respective frequency bands in which the beacon or probe response frame is received from the external electronic device 220. The processor 300 may control the communication circuit 310 to set up links corresponding to at least some frequency bands (e.g., at least two frequency bands) among multiple frequency bands supportable for the MLO, based on the radio signal states of the respective frequency bands. As an example, the processor 300 may estimate throughputs of the respective frequency bands, based on the radio signal states of the respective frequency bands. The processor 300 may identify throughputs (e.g., the sum of the throughputs) of link combinations supportable by the electronic device 101, based on the throughputs of the respective frequency bands. The processor 300 may control the communication circuit 310 to set up a combination of links having a highest throughput.

According to various embodiments, the processor 300 may configure, to be an active link, at least one link among the multiple links (e.g., the first link 231, the second link 232, and/or the third link 233) to the external electronic device 220, and may configure at least one remaining link to be an inactive link. For example, the active link is at least one link that can be used for wireless LAN communication by the electronic device 101 and the external electronic device 220, and may be configured based on the number of links concurrently operable by the electronic device 101 and the external electronic device 220. As an example, the active link may be configured based on a minimum value (e.g., about two) among the number (e.g., about two) of links concurrently operable by the electronic device 101 and the number (e.g., three) of links concurrently operable by the external electronic device 220. As an example, the number of links concurrently operable by the electronic device 101 may be configured based on the communication circuits 312 and/or 314 included in the wireless LAN communication circuit 310. As an example, the inactive link may include at least one link that is not used for wireless LAN communication from among the links set up between the electronic device 101 and the external electronic device 220.

According to an embodiment, the processor 300 may initially configure the active link, based on setting up of the multiple links to the external electronic device 220. For example, the initial configuration of the active link may include a series of operations of configuring, to be the active link, at least one link (e.g., the first link 231) used for setting up of the multiple links to the external electronic device 220 from among the multiple links (e.g., the first link 231, the second link 232, and/or the third link 233). For example, the initial configuration of the active link may include a series of operations of configuring, to be the active link, at least one link (e.g., the second link 232) randomly selected from among links that are not used for setting up of the multiple links (e.g., the first link 231, the second link 232, and/or the third link 233). For example, the initial configuration of the active link may include a series of operations of configuring, to be the active link, at least one link (e.g., the second link 232) selected based on a radio signal state (e.g., a received signal strength) from among links that are not used for setting up of the multiple links (e.g., the first link 231, the second link 232, and/or the third link 233). As an example, radio signal states of the links that are not used for setting up of multiple links may be acquired via reception of a beacon or a probe response frame, or may be acquired via a separate search. For example, the processor 300 may assign, to each link, the communication circuits 312 and/or 314 for controlling each of at least one link configured to be the active link. As an example, the communication circuits 312 and/or 314 may be assigned based on frequency bands supported by the communication circuits 312 and 314 and a frequency band of each link.

According to an embodiment, when setting up of multiple links to the external electronic device 220 is completed, the processor 300 may identify a radio signal state of each of the multiple links. As an example, the radio signal state may include at least one of information on the standards of wireless LAN communication (e.g., Wi-Fi), the number of spatial streams allowed by the external electronic device 220, information on a transmission power of the external electronic device 220, the number of spatial streams allowed by the electronic device 101, a received signal strength, a link transmission and/or reception speed (e.g., a link speed), a channel utilization rate, a clear channel assessment (CCA) busy time, a wireless communication activation time (radio on time), a transmission (transmit) power, and the number of times of transmission success (e.g., a Tx success count) or the number of retransmissions (e.g., Tx retransmission count). As an example, the number of spatial streams allowed by the external electronic device 220 may be configured based on antennas (or the number of antennas) of the external electronic device 220. As an example, the information related to the transmission power of the external electronic device 220 is acquired from the external electronic device 220 via a beacon frame, and may include a transmit power control (TPC). As an example, the number of spatial streams allowed by the electronic device 101 may be configured based on antennas (or the number of antennas) of the electronic device 101.

For example, the processor 300 may identify a radio signal state of the active link among multiple links. For example, the processor 300 may determine the communication circuit 312 and/or 314 to be assigned to the inactive link. The processor 300 may switch, to be in an inactive state (e.g., a sleep state), the active link assigned to the communication circuit 312 and/or 314 to be assigned to the inactive link, and may assign the inactive link to the communication circuit 312 and/or 314. The processor 300 may control the communication circuit 312 and/or 314 to identify the radio signal state of the inactive link via a search related to the inactive link. As an example, the communication circuits 312 and/or 314 to be assigned to the inactive link may be determined based on a frequency band supported by the communication circuit 312 and/or 314 and a frequency band of the inactive link. As an example, switching to be inactive may include a series of operations for switching at least one active link to be inactive via power management. For example, the processor 300 may determine the communication circuit 312 and/or 314 to be assigned to the inactive link. The processor 300 may assign, to the remaining active link, a traffic identifier (TID) of the active link assigned to the communication circuit 312 and/or 314 to be assigned to the inactive link, and may remove the TID of the active link assigned to communication circuit 312 and/or 314 to be assigned to the inactive link. The processor 300 may switch, to be in an inactive state (e.g., a sleep state), the active link assigned to the communication circuit 312 and/or 314 to be assigned to the inactive link, and may assign the inactive link to the communication circuit 312 and/or 314. The processor 300 may control the communication circuit 312 and/or 314 to identify the radio signal state of the inactive link via a search related to the inactive link. As an example, assigning of the TID of the active link assigned to the communication circuit 312 and/or 314 to be assigned to the inactive link to the remaining active link may include a series of operations of assigning the TID to the remaining active link so that data (or packet) communication related to the TID assigned only to the active link assigned to the communication circuit 312 and/or 314 to be assigned to the inactive link is maintained via the remaining active link. As an example, if the TID of the active link assigned to the communication circuit 312 and/or 314 to be assigned to the inactive link is assigned to the remaining active link, a series of operations of assigning, to the remaining active link, the TID of the active link assigned to the communication circuit 312 and/or 314 to be assigned to the inactive link may be omitted (or limited).

According to an embodiment, the processor 300 may configure at least one of multiple links (e.g., the first link 231, the second link 232, and/or the third link 233) to the external electronic device 220 to be the active link, based on a transmission power limit and/or a radio signal state of each of the multiple links, and may configure at least one remaining link to be the inactive link. For example, the processor 300 may estimate a throughput of each link, based on the radio signal state of each of the multiple links. The processor 300 may identify throughputs (e.g., the sum of the throughputs) of link combinations supportable by the electronic device 101 from among the multiple links, based on throughputs of the respective frequency links. The processor 300 may configure, to be active links, a combination of links having a highest throughput, and may configure at least one remaining link to be the inactive link. As an example, a combination of links supportable by the electronic device 101 may be configured based on frequency bands supported by the first communication circuit 312 and the second communication circuit 314. For example, the processor 300 may identify throughputs (e.g., the sum of the throughputs) of link combinations supportable by the electronic device 101, based on the transmission power limit. The processor 300 may configure, to be active links, a combination of links having a highest throughput, and may configure at least one remaining link to be the inactive link. As an example, the link combination supportable by the electronic device 101, which is based on the transmission power limit, is a part of link combinations configurable by the multiple links set up between the electronic device 101 and the external electronic device 220, and may include at least one link combination configured so that the sum of transmission powers of at least one link included in the link combination does not exceed a designated reference transmission power. As an example, the designated reference transmission power may be configured based on a specific absorption rate (SAR) or a time averaged SAR (TAR). As an example, the transmission power limit may be applied when a transmission power of a frequency band used for wireless LAN communication is limited.

According to an embodiment, the processor 300 may activate at least one link (e.g., the active link) via TID link mapping (e.g., TID to link mapping) or power management, and may control the first communication circuit 312 and/or the second communication circuit 314 to inactivate at least one remaining link (e.g., the inactive link). For example, the processor 300 may control the first communication circuit 312 and/or the second communication circuit 314 to assign a TID to be used in uplink and/or downlink of at least one link configured to be the active link, via TID link mapping. As an example, TID assignment may include a series of operations of associating the TID to be used in uplink and/or downlink of the active link with the external electronic device 220 via at least one link (e.g., the active link and/or the inactive link) among multiple links. For example, the processor 300 may control the first communication circuit 312 and/or the second communication circuit 314 to limit assignment of the TID to be used in uplink and/or downlink of at least one link configured to be the inactive link, via TID link mapping. As an example, TID assignment limitation may include a series of operations in which the electronic device 101 unmaps the TID assigned to the inactive link via at least one link (e.g., the active link and/or the inactive link) among multiple links. For example, the processor 300 may control the first communication circuit 312 and/or the second communication circuit 314 to activate at least one link configured to be the active link among multiple links, via power management. As an example, power management for link activation may include a series of operations of configuring a power management (PM) bit of "Null data frame" to be a first value (e.g., "0") and perform transmission to the external electronic device 220. For example, the processor 300 may control the first communication circuit 312

and/or the second communication circuit 314 to inactivate at least one link configured to be the inactive link among multiple links, via power management. As an example, power management for link inactivation may include a series of operations of configuring the PM bit of "Null data frame" to be a second value (e.g., "1") and perform transmission to the external electronic device 220.

According to various embodiments, the processor 300 may control the first communication circuit 312 and/or the second communication circuit 314 to transmit data to and/or receive data from the external electronic device 220 via activation links. According to an embodiment, the processor 300 may detect an effective link among the active links. The processor 300 may control the first communication circuit 312 and/or the second communication circuit 314 to transmit data to and/or receive data from the external electronic device 220 via the effective link. As an example, the active link is at least one link that can be used for wireless LAN communication by the electronic device 101 and the external electronic device 220, and may be configured based on the number of links concurrently operable by the electronic device 101. As an example, an effective link is at least one link having a corresponding throughput exceeding a designated reference throughput from among the active links, and may include at least one link to be used for wireless LAN communication by the electronic device 101 and the external electronic device 220.

According to various embodiments, the processor 300 may identify whether a designated link switching condition is satisfied, based on radio signal states of the active links used for transmitting data to and/or receiving data from the external electronic device 220. According to an embodiment, the processor 300 may identify whether a service area of the external electronic device 220, in which the electronic device 101 is located, is changed, based on radio signal states of the active links used for transmitting data to and/or receiving data from the external electronic device 220. If it is determined that the service area of the external electronic device 220, in which the electronic device 101 is located, is changed, the processor 300 may determine that the designated link switching condition is satisfied. If it is determined that the service area of the external electronic device 220, in which the electronic device 101 is located, is not changed, the processor 300 may determine that the designated link switching condition is not satisfied.

According to various embodiments, the processor 300 may identify a radio signal state of the inactive link, based on determination that the designated link switching condition is satisfied. According to an embodiment, the processor 300 may determine the communication circuit 312 and/or 314 to be assigned to the inactive link. The processor 300 may switch, to be in an inactive state (e.g., a sleep state), the active link assigned to the communication circuit 312 and/or 314 to be assigned to the inactive link, and may assign the inactive link to the communication circuit 312 and/or 314. The processor 300 may control the communication circuit 312 and/or 314 to identify the radio signal state of the inactive link via a search related to the inactive link. For example, the processor 300 may assign, to the remaining active link, a traffic identifier (TID) of the active link assigned to the communication circuit 312 and/or 314 to be assigned to the inactive link, and may remove the TID of the active link assigned to communication circuit 312 and/or 314 to be assigned to the inactive link. For example, if there is the communication circuit 312 or 314 to which the active link is not assigned, the processor 300 may identify whether the communication circuit, to which the active link is not assigned, supports the inactive link. If the communication circuit, to which the active link is not assigned, supports the inactive link, the processor 300 may determine the communication circuit, to which the active link is not assigned, to be a communication circuit to be assigned to the inactive link.

According to an embodiment, based on determination that the designated link switching condition is satisfied, the processor 300 may identify a radio signal state of at least one link which has not been set up but can be additionally set up with respect to the external electronic device 220. For example, the processor 300 may additionally set up at least one link via association (or re-association) with the external electronic device 220. The processor 300 may identify a radio signal state of at least one additionally set-up link.

According to various embodiments, the processor 300 may reconfigure the active link and/or the inactive link, based on radio signal states of the active link and the inactive link. According to an embodiment, the processor 300 may estimate a throughput of each link, based on the radio signal states of the active link and the inactive link. The processor 300 may identify throughputs (e.g., the sum of the throughputs) of link combinations supportable by the electronic device 101, based on the throughputs of respective links. The processor 300 may configure, to be active links, a combination of links having a highest throughput, and may configure at least one remaining link to be the inactive link. As an example, a combination of links supportable by the electronic device 101 may be configured based on frequency bands supported by the first communication circuit 312 and the second communication circuit 314.

According to an embodiment, based on multiple links set up with respect to the external electronic device 220, and the radio signal state of at least one link additionally set up with respect to the external electronic device 220, the processor 300 may estimate a throughput of each link. The processor 300 may identify throughputs (e.g., the sum of the throughputs) of link combinations supportable by the electronic device 101, based on the throughputs of respective links. The processor 300 may configure, to be active links, a combination of links having a highest throughput, and may configure at least one remaining link to be the inactive link. As an example, a combination of links supportable by the electronic device 101 may be configured based on frequency bands supported by the first communication circuit 312 and the second communication circuit 314.

According to an embodiment, the processor 300 may detect at least one effective link among the active links. If it is determined that a throughput required by the electronic device 101 and/or the external electronic device 220 can be satisfied via at least one effective link, the processor 300 may control the first communication circuit 312 and/or the second communication circuit 314 to transmit data to and/or receive data from the external electronic device 220 via the at least one effective link. For example, if it is determined that a throughput required by the electronic device 101 and/or the external electronic device 220 can be satisfied via at least a part of at least one effective link, the processor 300 may control the first communication circuit 312 and/or the second communication circuit 314 to transmit data to and/or receive data from the external electronic device 220 via at least a part of the at least one effective link. For example, the processor 300 may configure, to be the inactive link, a link which is not used for transmitting data to and/or receiving data from the external electronic device 220.

According to various embodiments, the processor 300 may control the wireless LAN communication circuit 310 to perform wireless LAN communication with the external electronic device 220 via the reconfigured active link (or effective link). According to an embodiment, based on the radio signal states of the active link and the inactive link, the processor 300 may reconfigure, to be the inactive link, the active link (e.g., the second link) used for wireless LAN communication at a previous time point, and may reconfigure, to be the active link, the inactive link (e.g., the first link and/or the third link) not used for the wireless LAN communication at a previous time point. The processor 300 may identify whether there exists a communication circuit (e.g., the second communication circuit 314) to which no active link (e.g., the second link) is assigned at a previous time point. If there exists a communication circuit (e.g., the second communication circuit 314) to which no active link (e.g., the second link) is assigned at a previous time point, the processor 300 may identify whether there exists the inactive link reconfigured to be the active link supported by the communication circuit (e.g., the second communication circuit 314) to which no active link is assigned at a previous time point. If there is the inactive link (e.g., the third link) reconfigured to be the active link supported by the communication circuit (e.g., the second communication circuit 314) to which no active link is assigned at a previous time point, the processor 300 may switch the inactive link (e.g., the third link) to an active link via the communication circuit (e.g., the second communication circuit 314) to which no active link is assigned at a previous time point. The processor 300 may switch the active link (e.g., the second link) of a previous time point to the inactive link, based on switching of the inactive link to the active link. If there exists the inactive link (e.g., the first link) that has been reconfigured to be the active link but has not been switched to the active link, the processor 300 may switch the inactive link (e.g., the first link) to be the active link via a communication circuit (e.g., the first communication circuit 312) to which the active link (e.g., the second link) of a previous time point is assigned, based on switching of the active link to the inactive link. As an example, the previous time point may include a point in time before performing reconfiguration of the active link and/or the inactive link. As an example, the processor 300 may use a separate communication circuit to switch the inactive link to the active link and then switch the active link to the inactive link, thereby preventing a state where wireless LAN communication is temporarily disconnected, i.e., a state where all links set up between the electronic device 101 and the external electronic device 220 are concurrently inactivated.

According to various embodiments, if there is no effective link among the active links or it is determined that a throughput required by the electronic device 101 and/or the external electronic device 220 cannot be satisfied via at least one effective link, the processor 300 may control the communication circuit 310 to move wireless LAN communication (e.g., roaming) to another external electronic device. According to an embodiment, if there is no effective link among the active links or it is determined that a throughput required by the electronic device 101 and/or the external electronic device 220 cannot be satisfied via at least one effective link, the processor 300 may identify, via scanning, whether another external electronic device (e.g., another AP) accessible by the electronic device 101 exists. According to an embodiment, if there is another external electronic device accessible by the electronic device 101, the processor 300 may control the communication circuit 310 to set up a communication link to the another external electronic device. The processor 300 may control the communication circuit 310 to perform wireless LAN communication via the communication link to the another external electronic device. According to an embodiment, if there is no other external electronic device accessible by the electronic device 101, the processor 300 may control a separate communication circuit to access a cellular network. As an example, the separate communication circuit is a communication circuit different from the communication circuit 310 supporting wireless LAN communication, and may support cellular communication of the electronic device 101.

According to various embodiments, the memory 320 may store various data used by at least one element (e.g., the processor 300 and/or the wireless communication circuit 310) of the electronic device 101. According to an embodiment, the memory 320 may store various instructions executable via the processor 300.

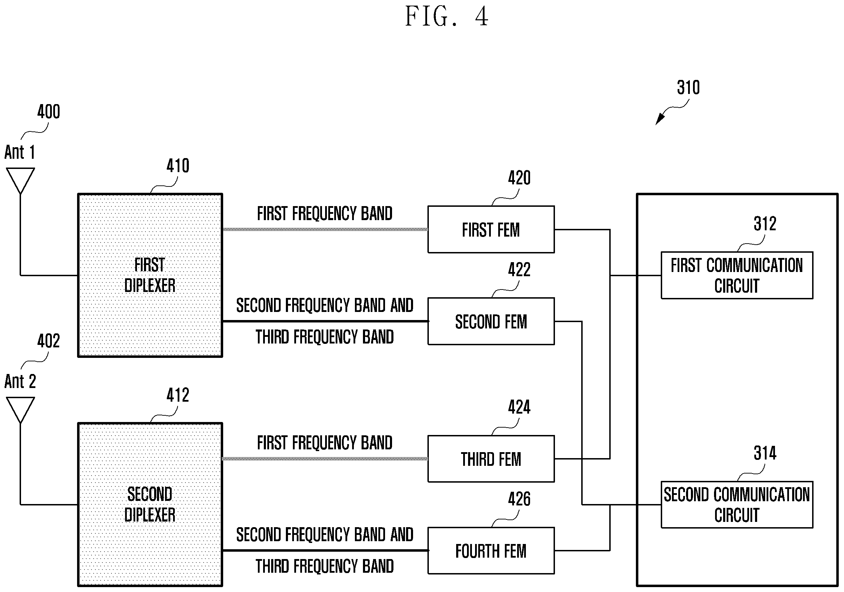

FIG. 4 is a block diagram of a wireless LAN communication circuit supporting the MLO according to various embodiments. According to an embodiment, the electronic device 101 of FIG. 4 may be at least partially similar to the electronic device 101 of FIG. 1, FIG. 2, or FIG. 3, or may include another embodiment of the electronic device. As an example, the electronic device 101 includes two antennas 400 and 402, but is not limited thereto.

According to various embodiments referring to FIG. 4, the wireless LAN communication circuit 310 of the electronic device 101 may include a first antenna 400, a second antenna 402, a first diplexer 410, a second diplexer 412, a first front end module (FEM) 420, a second FEM 422, a third FEM 424, a fourth FEM 426, the first communication circuit 312, and/or the second communication circuit 314.

According to various embodiments, the first diplexer 410 may separate signals transmitted and/or received through the first antenna 400 into a signal of a first frequency band (e.g., a band of about 2.4 GHz) (or the first link 231), a signal of a second frequency band (e.g., a band of about 5 GHz) (or the second link 232), and a signal of a third frequency band (e.g., a band of about 6 GHz) (or the third link 233).

According to various embodiments, the first FEM 420 is disposed on an electrical path between the first diplexer 410 and the first communication circuit 312, and may process a signal of the first frequency band. According to an embodiment, when the electronic device 101 transmits a signal to the external electronic device 220, the first FEM 420 may convert a baseband signal provided from the first communication circuit 312 into a high-frequency (e.g., radio frequency (RF)) signal of the first frequency band. The first FEM 420 may amplify power of the high-frequency signal and output the power-amplified signal to the first diplexer 410. According to an embodiment, when the electronic device 101 receives a signal from the external electronic device 220, the first FEM 420 may low-noise amplify the signal of the first frequency band provided from the first diplexer 410. The first FEM 420 may convert the low-noise amplified signal into a baseband signal, and output the converted signal to the first communication circuit 312.

According to various embodiments, the second FEM 422 is disposed on an electrical path between the first diplexer 410 and the second communication circuit 314, and may process a signal of the second frequency band and/or a signal of the third frequency band. According to an embodiment, when the electronic device 101 transmits a signal to the external electronic device 220, the second FEM 422 may convert a baseband signal provided from the second communication circuit 314 into a high-frequency signal of the second frequency band and/or that of the third frequency band. The second FEM 422 may amplify power of the high-frequency signals and output the power-amplified signals to the first diplexer 410. According to an embodiment, when the electronic device 101 receives a signal from the external electronic device 220, the second FEM 422 may low-noise amplify the signals of the second frequency band and/or the third frequency band provided from the first diplexer 410. The second FEM 422 may convert the low-noise amplified signals into baseband signals, and output the converted signals to the second communication circuit 314.

According to various embodiments, the second diplexer 412 may separate signals transmitted and/or received through the second antenna 402 into a signal of the first frequency band (e.g., a band of about 2.4 GHz) and signals of the second frequency band (e.g., a band of about 5 GHz) and the third frequency band (e.g., a band of about 6 GHz).

According to various embodiments, the third FEM 424 is disposed on an electrical path between the second diplexer 412 and the first communication circuit 312, and may process a signal of the first frequency band. According to an embodiment, when the electronic device 101 transmits a signal to the external electronic device 220, the third FEM 424 may convert a baseband signal provided from the first communication circuit 312 into a high-frequency signal of the first frequency band. The third FEM 424 may amplify power of the high-frequency signal and output the power-amplified signal to the second diplexer 412. According to an embodiment, when the electronic device 101 receives a signal from the external electronic device 220, the third FEM 424 may low-noise amplify the signal of the first frequency band provided from the second diplexer 412. The third FEM 424 may convert the low-noise amplified signal into a baseband signal, and output the converted signal to the first communication circuit 312.

According to various embodiments, the fourth FEM 426 is disposed on an electrical path between the second diplexer 412 and the second communication circuit 314, and may process a signal of the second frequency band and/or a signal of the third frequency band. According to an embodiment, when the electronic device 101 transmits a signal to the external electronic device 220, the fourth FEM 426 may convert a baseband signal provided from the second communication circuit 314 into a high-frequency signal of the second frequency band and/or that of the third frequency band. The fourth FEM 426 may amplify power of the high-frequency signals and output the power-amplified signals to the second diplexer 412. According to an embodiment, when the electronic device 101 receives a signal from the external electronic device 220, the fourth FEM 426 may low-noise amplify the signals of the second frequency band and/or the third frequency band provided from the second diplexer 412. The fourth FEM 426 may convert the low-noise amplified signals into baseband signals, and output the converted signals to the second communication circuit 314.

According to various embodiments, the first communication circuit 312 and the second communication circuit 314 may process baseband signals transmitted and/or received via different links (or different frequency bands or at least partially different frequency bands). According to an embodiment, the first communication circuit 312 may process data transmitted and/or received via the first frequency band (e.g., a band of about 2.4 GHz) (or the first link 231). For example, when the electronic device 101 transmits a signal to the external electronic device 220, the first communication circuit 312 may generate a baseband signal to be transmitted to the external electronic device 220 via the first frequency band and provide the baseband signal to the first FEM 420 and/or the second FEM 424. For example, when the electronic device 101 receives a signal from the external electronic device 220, the first communication circuit 312 may process a baseband signal received from the external electronic device 220 via the first frequency band (or the first link 231) provided from the FEM 420 and/or the second FEM 424.

According to an embodiment, the second communication circuit 314 may process data transmitted and/or received via the second frequency band (e.g., a band of about 5 GHz) (or the second link 232) and/or the third frequency band (e.g., a band of about 6 GHz) (or the third link 233). For example, when the electronic device 101 transmits a signal to the external electronic device 220, the second communication circuit 314 may generate a baseband signal to be transmitted to the external electronic device 220 via the second frequency band and/or the third frequency band, and provide the baseband signal to the second FEM 422 and/or the fourth FEM 426. For example, when the electronic device 101 receives a signal from the external electronic device 220, the second communication circuit 314 may process a baseband signal received from the external electronic device 220 via the second frequency band (or the second link 232) and/or the third frequency band (or the third link 233) provided from the second FEM 422 and/or the fourth FEM 426.

According to an embodiment, when processing a signal of the first frequency band (e.g., a band of about 2.4 GHz) (or the first link 231) via the first communication circuit 312, the second communication circuit 314 may process a signal of the second frequency band (or the second link 232) or a signal of the third frequency band (or the third link 233).

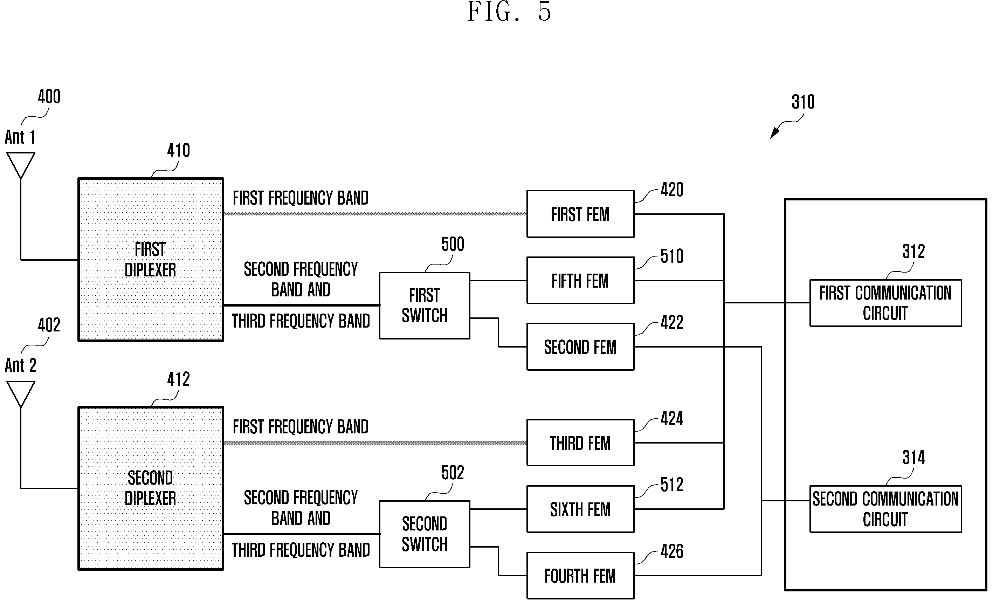

FIG. 5 is a block diagram of a wireless LAN communication circuit supporting the MLO according to various embodiments. According to an embodiment, the electronic device 101 of FIG. 5 may be at least partially similar to the electronic device 101 of FIG. 1, FIG. 2, or FIG. 3, or may include another embodiment of the electronic device.

According to various embodiments referring to FIG. 5, the wireless LAN communication circuit 310 of the electronic device 101 may include the first antenna 400, the second antenna 402, the first diplexer 410, the second diplexer 412, the first FEM 420, the second FEM 422, the third FEM 424, the fourth FEM 426, the first communication circuit 312, the second communication circuit 314, a first switch 500, a second switch 502, a fifth FEM 510, and/or a sixth FEM 512. According to an embodiment, the first antenna 400, the second antenna 402, the first diplexer 410, the second diplexer 412, the first FEM 420, the second FEM 422, the third FEM 424, and the fourth FEM 426 of FIG. 5 operate in the same manner as the first antenna 400, the second antenna 402, the first diplexer 410, the second diplexer 412, the first FEM 420, the second FEM 422, the third FEM 424, and the fourth FEM 426 of FIG. 4, and detailed descriptions thereof are omitted.

According to various embodiments, the first switch 500 may electrically connect the second FEM 422 and/or the fifth FEM 510 to the first diplexer 410. According to an embodiment, when a signal of a second frequency band (e.g., a band of about 5 GHz) (or the second link 232) and/or a signal of a third frequency band (e.g., a band of about 6 GHz) (or the third link 233) are processed in the first communication circuit 312, the first switch 500 may electrically connect the fifth FEM 510 and the first diplexer 410. According to an embodiment, when a signal of the second frequency band (e.g., a band of about 5 GHz) (or the second link 232) and/or a signal of the third frequency band (e.g., a band of about 6 GHz) (or the third link 233) are processed in the second communication circuit 314, the first switch 500 may electrically connect the second FEM 422 and the first diplexer 410. For example, the first switch 500 may include a double pole double throw (DPDT) type switch.

According to various embodiments, the fifth FEM 510 is disposed on an electrical path between the first switch 500 and the first communication circuit 312, and may process a signal of the second frequency band and/or a signal of the third frequency band. According to an embodiment, when the electronic device 101 transmits a signal to the external electronic device 220, the fifth FEM 510 may convert a baseband signal provided from the first communication circuit 312 into a high-frequency signal of the second frequency band and/or that of the third frequency band. The fifth FEM 510 may amplify power of the high-frequency signals and output the power-amplified signals to the first diplexer 410 via the first switch 500. According to an embodiment, when the electronic device 101 receives a signal from the external electronic device 220, the fifth FEM 510 may low-noise amplify the signals of the second frequency band and/or the third frequency band provided from the first diplexer 410 via the first switch 500. The fifth FEM 510 may convert the low-noise amplified signals into baseband signals, and output the converted signals to the first communication circuit 312.

According to various embodiments, the second switch 502 may electrically connect the fourth FEM 426 and/or the sixth FEM 512 to the second diplexer 412. According to an embodiment, when a signal of the second frequency band (e.g., a band of about 5 GHz) (or the second link 232) and/or a signal of the third frequency band (e.g., a band of about 6 GHz) (or the third link 233) are processed in the first communication circuit 312, the second switch 502 may electrically connect the sixth FEM 512 and the second diplexer 412. According to an embodiment, when a signal of the second frequency band (e.g., a band of about 5 GHz) (or the second link 232) and/or a signal of the third frequency band (e.g., a band of about 6 GHz) (or the third link 233) are processed in the second communication circuit 314, the second switch 502 may electrically connect the fourth FEM 426 and the second diplexer 412. For example, the second switch 502 may include a DPDT type switch.

According to various embodiments, the sixth FEM 512 is disposed on an electrical path between the second switch 502 and the first communication circuit 312, and may process a signal of the second frequency band and/or a signal of the third frequency band. According to an embodiment, when the electronic device 101 transmits a signal to the external electronic device 220, the sixth FEM 512 may convert a baseband signal provided from the first communication circuit 312 into a high-frequency signal of the second frequency band and/or that of the third frequency band. The sixth FEM 512 may amplify power of the high-frequency signals and output the power-amplified signals to the second diplexer 412 via the second switch 502. According to an embodiment, when the electronic device 101 receives a signal from the external electronic device 220, the sixth FEM 512 may low-noise amplify the signals of the second frequency band and/or the third frequency band provided from the second diplexer 412 via the second switch 502. The sixth FEM 512 may convert the low-noise amplified signals into baseband signals, and output the converted signals to the first communication circuit 312.

According to various embodiments, the first communication circuit 312 and the second communication circuit 314 may process baseband signals transmitted and/or received via different links (or different frequency bands or at least partially different frequency bands). According to an embodiment, the first communication circuit 312 may process data transmitted and/or received via the first frequency band (e.g., a band of about 2.4 GHz) (or the first link 231). For example, when the electronic device 101 transmits a signal to the external electronic device 220, the first communication circuit 312 may generate a baseband signal to be transmitted to the external electronic device 220 via the first frequency band and provide the baseband signal to the first FEM 420 and/or the second FEM 424. For example, when the electronic device 101 transmits a signal to the external electronic device 220, the first communication circuit 312 may generate baseband signals to be transmitted to the external electronic device 220 via the second frequency band and/or the third frequency band, and provide the baseband signals to the second FEM 510 and/or the fourth FEM 512. For example, when the electronic device 101 receives a signal from the external electronic device 220, the first communication circuit 312 may process a baseband signal received from the external electronic device 220 via the first frequency band (or the first link 231) provided from the FEM 420 and/or the second FEM 424. For example, when the electronic device 101 receives a signal from the external electronic device 220, the first communication circuit 312 may process baseband signals received from the external electronic device 220 via the second frequency band (e.g., the second link 232) and/or the third frequency band (e.g., the third link 233) provided from the fifth FEM 510 and/or the sixth FEM 512.

According to an embodiment, when processing a signal of the first frequency band (e.g., a band of about 2.4 GHz) (or the first link 231) via the first communication circuit 312, the second communication circuit 314 may process a signal of the second frequency band (or the second link 232) or a signal of the third frequency band (or the third link 233). According to an embodiment, when processing a signal of the second frequency band (e.g., a band of about 5 GHz) (or the second link 232) via the first communication circuit 312, the second communication circuit 314 may process a signal of the third frequency band (or the third link 233). According to an embodiment, when a signal of at least a partial band (e.g., UNII 1 or 2A of a band about 5 GHz) of the second frequency band (e.g., a band of about 5 GHz) (or the second link 232) is processed via the first communication circuit 312, the second communication circuit 314 may process a signal of another part (e.g., UNII 2C, 3, or 4 of the band about 5 GHz) of the second frequency band or a signal of the third frequency band (or the third link 233).

According to various embodiments, the electronic device (e.g., the electronic device 101 of FIG. 1, FIG. 2, FIG. 3, FIG. 4, or FIG. 5) may include at least one communication circuit (e.g., the wireless communication module 192 of FIG. 1, and the wireless LAN communication circuit 310, the first communication circuit 312, and/or the second communication circuit 314 of FIG. 3) supporting wireless LAN communication, and a processor (the processor 120 of FIG. 1 or the processor 300 of FIG. 3) operatively connected to the communication circuit. According to an embodiment, the processor may set up multiple links (e.g., the first link 231, the second link 232, and/or the third link 233 of FIG. 2) to an external electronic device (e.g., the electronic device 102 of FIG. 1 or the external electronic device 220 of FIG. 2) via the at least one communication circuit. According to an embodiment, the processor may configure, to be an active link via at least one communication circuit, at least one link among the multiple links and may configure at least one other link to be an inactive link. According to an embodiment, the processor may transmit data to and/or receive data from the external electronic device via the active link. According to an embodiment, the processor may identify a radio signal state of the inactive link if it is determined to perform link switching, based on a radio signal state of the active link. According to an embodiment, based on the radio signal states of the active link and the inactive link, the processor may reconfigure an active link and an inactive link of the multiple links, and transmit data to and/or receive data from the external electronic device via the reconfigured active link.

According to various embodiments, based on the number of the at least one communication circuit, the processor may configure, to be the active link, at least one link among the multiple links and may configure, to be the inactive link, at least one link remaining after excluding the active link from the multiple links.

According to various embodiments, the processor may configure, to be the active link, at least one link among the multiple links, which is used for setting up of the multiple links, may additionally configure, to be the active link, at least one random link among at least one link that is not used for setting up of the multiple links, and may configure, to be the inactive link, at least one link that is not configured to be the active link from among the multiple links.

According to various embodiments, the processor may identify the radio signal states of the active link and the inactive link, based on completion of setting up of the multiple links, may configure, to be the active link, at least one link among the multiple links, based on the radio signal states of the active link and the inactive link, and may configure at least one other link to be the inactive link.

According to various embodiments, the processor may identify a communication circuit to which the inactive link is to be assigned, may switch, to be inactive, an active link assigned to the communication circuit to which the inactive link is to be assigned, and may identify the radio signal state of the inactive link via a search related to the inactive link via the communication circuit.

According to various embodiments, the processor may assign, to another active link via TID link mapping (e.g., TID to link mapping), a TID of the active link assigned to the communication circuit to which the inactive link is to be assigned, may remove the TID of the active link assigned to the communication circuit to which the inactive link is to be assigned, and may switch, to be inactive, the active link from which the TID has been removed.

According to various embodiments, the processor may configure, to be a designated first value, a power management bit of a frame related to power management of the active link assigned to the communication circuit to which the inactive link is to be assigned, so as to perform transmission to the external electronic device, wherein the active link assigned to the communication circuit to which the inactive link is to be assigned is switched to be inactive, based on the configuration to be the designated first value.

According to various embodiments, the processor may identify a throughput of each of the multiple links, based on the radio signal states of the active link and the inactive link, may identify throughputs of respective link combinations supportable by the electronic device, based on the throughput of each of the multiple links, may configure, to be the active link, at least one link included in a link combination having a highest throughput from among the link combinations, and may configure at least one other link to be the inactive link.

According to various embodiments, the processor may detect at least one effective link, based on a throughput of each of the at least one active link included in the link combination having the highest throughput, and if it is determined that a throughput required by the electronic device and/or the external electronic device can be satisfied via the at least one effective link, the processor may transmit data to and/or receive data from the external electronic device via the at least one effective link.

According to various embodiments, the processor may transmit data to and/or receive data from the external electronic device via at least a part of the at least one effective link selected based on a data size for transmission and/or reception by the electronic device and/or the external electronic device.

According to various embodiments, if the at least one effective link is not detected, or it is determined that the throughput required by the electronic device and/or the external electronic device cannot be satisfied via the at least one effective link, the processor may perform access to another external electronic device or perform switching to a cellular network.

According to various embodiments, the processor may identify, based on the radio signal state of the active link, whether a service area of the external electronic device, in which the electronic device is located, is changed, and may determine that link switching is performed, based on determination that the service area of the external electronic device, in which the electronic device is located, has been changed.

According to various embodiments, the radio signal state may include at least one of information on the standards of wireless LAN communication, the number of spatial streams allowed by the external electronic device, information on a transmission power of the external electronic device, the number of spatial streams allowed by the electronic device, a received signal strength, a link transmission and/or reception speed, a channel utilization rate, a CCA busy time, a radio on time, a transmit power, and the number of times of transmission success or the number of retransmissions.

According to various embodiments, if it is determined that link switching is performed, based on the radio signal state of the active link, the processor may additionally set up at least one link which has not been set up but can be additionally set up with respect to the external electronic device. According to an embodiment, the processor may identify a radio signal state of at least one additionally set-up link. According to an embodiment, the processor may reconfigure an active link and an inactive link of the multiple links to the external electronic device, based on the radio signal state of the active link and the radio signal state of the additionally set-up at least one link.

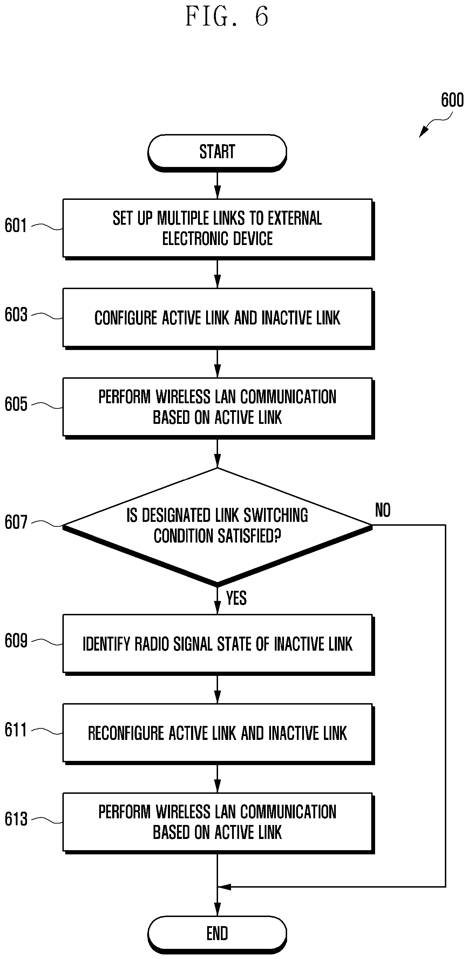

FIG. 6 is a flowchart 600 for configuring an active link in an electronic device according to various embodiments. In the following embodiments, respective operations may be sequentially performed, but are not necessarily performed sequentially. For example, the order of respective operations may be changed, and at least two operations may be performed in parallel. As an example, the electronic device of FIG. 6 may be the electronic device 101 of FIG. 1, FIG. 2, FIG. 3, FIG. 4, or FIG. 5.

According to various embodiments referring to FIG. 6, in operation 601, the electronic device (e.g., the electronic device 101 of FIG. 1, FIG. 2, FIG. 3, FIG. 4, or FIG. 5) or the processor (e.g., the processor 120 of FIG. 1 or the processor 300 of FIG. 3) may set up multiple links (e.g., the first link 231, the second link 232, and/or the third link 233 of FIG. 2) to an external electronic device (e.g., the external electronic device 220 of FIG. 2). According to an embodiment, the processor 300 may set up multiple links to the external electronic device 220 via the at least one frequency band (or link) among multiple frequency bands supported by the electronic device 101. For example, the processor 300 may acquire information on links (e.g., a first frequency band (or the first link 231), a second frequency band (or the second link 232), and/or a third frequency band (or the third link 233)) supportable for the MLO from the external electronic device 220 in a beacon or a probe response frame received via at least one frequency band (e.g., the first frequency band (or the first link 231) from the external electronic device 220. As an example, information on a link (or frequency band) may include a BSSID of each link (or frequency band) and/or a parameter related to the MLO. According to an embodiment, the processor 300 may control the wireless LAN communication circuit 310 to transmit, to the external electronic device 220, an association request frame related to multiple links via at least one link among the links supportable for the MLO in the external electronic device 220. As an example, the association request frame is information on the set-up of the first link 231, the second link 232, and/or the third link 233, and may include information on an operational parameter and/or capability of each link. For example, when information on acceptance is acquired from the external electronic device 220 in response to the association request frame, the processor 300 may determine that multiple links to the external electronic device 220 have been set up. For example, when information on rejection related to at least one link among multiple links is acquired from the external electronic device 220 in response to the association request frame, the processor 300 may determine that setting up of at least one link, which corresponds to the information on rejection, from among the multiple links to the external electronic device 220 has failed.

According to an embodiment, the processor 300 may control the communication circuit 310 to set up links corresponding to at least some frequency bands (e.g., at least two frequency bands) among multiple frequency bands supportable for the MLO by the electronic device 101 and/or the external electronic device 220. For example, the processor 300 may control the communication circuit 310 to set up links corresponding to frequency bands in which a beacon or a probe response frame is received from the external electronic device 220. As an example, the number of links corresponding to at least some frequency bands may be configured based on the number of links concurrently operable by the electronic device 101 and/or the external electronic device 220.

For example, based on the beacon or the probe response frame received via the frequency bands from the external electronic device 220, the processor 300 may identify radio signal states of the respective frequency bands. The processor 300 may control the communication circuit 310 to set up links corresponding to at least some frequency bands (e.g., at least two frequency bands) among multiple frequency bands supportable for the MLO, based on the radio signal states of the respective frequency bands. As an example, the processor 300 may estimate throughputs of the respective frequency bands, based on the radio signal states of the respective frequency bands. The processor 300 may identify throughputs (e.g., the sum of the throughputs) of link combinations supportable by the electronic device 101, based on the throughputs of the respective frequency bands. The processor 300 may control the communication circuit 310 to set up a combination of links having a highest throughput.

According to various embodiments, in operation 603, the electronic device (e.g., the electronic device 101) or the processor (e.g., the processor 120 or 300) may configure, to be an active link, at least one link among multiple links (e.g., the first link 231, the second link 232, and/or the third link 233) to the external electronic device, and may configure at least one remaining link to be an inactive link. As an example, the active link is at least one link that can be used for wireless LAN communication by the electronic device 101 and the external electronic device 220, and may be configured based on the number of links concurrently operable by the electronic device 101. As an example, the number of links concurrently operable by the electronic device 101 may be configured based on the communication circuits 312 and/or 314 included in the wireless LAN communication circuit 310. As an example, the inactive link may include at least one link that is not used for wireless LAN communication from among the links set up between the electronic device 101 and the external electronic device 220.

According to an embodiment, the processor 300 may initially configure the active link, based on setting up of the multiple links to the external electronic device 220. For example, the processor 300 may configure, to be the active link, at least one link (e.g., the first link 231) used for setting up of the multiple links to the external electronic device 220 from among multiple links. The processor 300 may additionally configure, to be the active link, at least one link (e.g., the second link 232) among the links that are not used for setting up of the multiple links. As an example, the additional configuration of at least one link to be the active link may include randomly configuring, to be the active link, at least one link among the links that are not used for setting up of the multiple links. As an example, the additional configuration of at least one link to be the active link may include a series of operations of configuring the active link, based on radio signal states (e.g., received signal strengths) of the links that are not used for setting up of the multiple links. As an example, radio signal states of the links that are not used for setting up of multiple links may be acquired via reception of a beacon or a probe response frame, or may be acquired via a separate search.

According to an embodiment, when setting up of the multiple links to the external electronic device 220 is completed, the processor 300 may identify the radio signal states of the respective multiple links. The processor 300 may configure, to be the active link, at least one of the multiple links (e.g., the first link 231, the second link 232, and/or the third link 233) to the external electronic device 220, based on a transmission power limit and/or a radio signal state of each of the multiple links, and may configure at least one remaining link to be the inactive link. For example, the active link may include a combination of links having a highest throughput (e.g., the sum of throughputs) from among link combinations supportable by the electronic device 101. The inactive link may include at least one remaining link that is not configured to be the active link among the multiple links. For example, the active link may include a combination of links having a highest throughput (e.g., the sum of throughputs), based on the transmission power limit, from among link combinations supportable by the electronic device 101. For example, the throughputs of the links may be estimated based on the radio signal states of the respective links. As an example, the radio signal state may include at least one of information on the standards of wireless LAN communication (e.g., Wi-Fi), the number of spatial streams allowed by the external electronic device 220, information on a transmission power of the external electronic device 220, the number of spatial streams allowed by the electronic device 101, a received signal strength, a link transmission and/or reception speed (e.g., a link speed), a channel utilization rate, a CCA busy time, a radio on time, a transmit power, and the number of times of transmission success (e.g., a Tx success count) or the number of retransmissions (e.g., Tx retransmission count). As an example, the number of spatial streams allowed by the external electronic device 220 may be configured based on antennas (or the number of antennas) of the external electronic device 220. As an example, the information related to the transmission power of the external electronic device 220 is acquired from the external electronic device 220 via a beacon frame, and may include a transmit power control (TPC). As an example, the number of spatial streams allowed by the electronic device 101 may be configured based on antennas (or the number of antennas) of the electronic device 101.

According to various embodiments, in operation 605, the electronic device (e.g., the electronic device 101) or the processor (e.g., the processor 120 or 300) may perform wireless LAN communication with the external electronic device, based on the active link among the multiple links to the external electronic device. According to an embodiment, the processor 300 may detect an effective link among the active links. As an example, the effective link is at least one link having a corresponding throughput exceeding a designated reference throughput from among the active links, and may include at least one link to be used for wireless LAN communication by the electronic device 101 and the external electronic device 220. According to an embodiment, the processor 300 may assign, to each link, the communication circuits 312 and/or 314 for controlling each of at least one effective link. As an example, the communication circuits 312 and/or 314 may be assigned based on frequency bands supported by the communication circuits 312 and 314 and a frequency band of each link. According to an embodiment, the processor 300 may activate at least one effective link via TID link mapping (e.g., TID to link mapping) or power management, and may control the first communication circuit 312 and/or the second communication circuit 314 to inactivate at least one link configured to be the inactive link. For example, the processor 300 may control the first communication circuit 312 and/or the second communication circuit 314 to assign a TID to be used in uplink and/or downlink of at least one link configured to be the active link (or effective link), via TID link mapping. As an example, TID assignment may include a series of operations of associating the TID to be used in uplink and/or downlink of the active link (or effective link) with the external electronic device 220 via at least one link (e.g., the active link and/or the inactive link) among multiple links. For example, the processor 300 may control the first communication circuit 312 and/or the second communication circuit 314 to limit assignment of the TID to be used in uplink and/or downlink of at least one link configured to be the inactive link, via TID link mapping. As an example, TID assignment limitation may include a series of operations in which the electronic device 101 unmaps the TID assigned to the inactive link via at least one link (e.g., the active link and/or the inactive link) among multiple links. For example, the processor 300 may control the first communication circuit 312 and/or the second communication circuit 314 to activate at least one link configured to be the active link (or effective link) among multiple links, via power management. As an example, power management for link activation may include a series of operations of configuring a power management (PM) bit of "Null data frame" to be a first value (e.g., "0") and perform transmission to the external electronic device 220. For example, the processor 300 may control the first communication circuit 312 and/or the second communication circuit 314 to inactivate at least one link configured to be the inactive link, via power management. As an example, power management for link inactivation may include a series of operations of configuring the PM bit of "Null data frame" to be a second value (e.g., "1") and perform transmission to the external electronic device 220. As an example, at least one link configured to be the inactive link may include at least one link remaining after excluding the effective link from the multiple links to the external electronic device 220.

According to an embodiment, the processor 300 may control the first communication circuit 312 and/or the second communication circuit 314 to transmit data to and/or receive data from the external electronic device 220 via at least one effective link.

According to various embodiments, in operation 607, the electronic device (e.g., the electronic device 101) or the processor (e.g., the processor 120 or 300) may identify whether a designated link switching condition is satisfied, based on the radio signal state of the active link (or effective link) used for data transmission to and/or data transmission from the external electronic device. According to an embodiment, the processor 300 may identify whether a service area of the external electronic device 220, in which the electronic device 101 is located, is changed, based on the radio signal state of the active link (or effective link). If it is determined that the service area of the external electronic device 220, in which the electronic device 101 is located, is changed, the processor 300 may determine that the designated link switching condition is satisfied. If it is determined that the service area of the external electronic device 220, in which the electronic device 101 is located, is not changed, the processor 300 may determine that the designated link switching condition is not satisfied.

According to various embodiments, if it is determined that the designated link switching condition is not satisfied (e.g., "No" in operation 607), the electronic device (e.g., the electronic device 101) or the processor (e.g., the processor 120 or 300) may terminate an embodiment for configuration of the active link. According to an embodiment, if it is determined that the designated link switching condition is not satisfied, the processor 300 may control the first communication circuit 312 and/or the second communication circuit 314 to transmit data to and/or receive data from the external electronic device 220 via the active link. According to an embodiment, the processor 300 may identify whether the designated link switching condition is satisfied in a designated period or at a designated time.

According to various embodiments, if it is determined that the designated link switching condition is satisfied (e.g., "Yes" in operation 607), the electronic device (e.g., the electronic device 101) or the processor (e.g., the processor 120 or 300) may identify the radio signal state of the inactive link in operation 609. According to an embodiment, if it is determined that the designated link switching condition is satisfied, the processor 300 may determine the communication circuit 312 and/or 314 to be assigned to the inactive link. The processor 300 may switch, to be in an inactive state (e.g., a sleep state), the active link assigned to the communication circuit 312 and/or 314 to be assigned to the inactive link, via TID link mapping and/or power management. The processor 300 may control the communication circuit 312 and/or 314 to identify the radio signal state of the inactive link via a search related to the inactive link. As an example, the communication circuits 312 and/or 314 to be assigned to the inactive link may be determined based on a frequency band supported by the communication circuit 312 and/or 314 and a frequency band of the inactive link. For example, the processor 300 may assign, to at least one remaining active link, a traffic identifier (TID) of the active link assigned to the communication circuit 312 and/or 314 to be assigned to the inactive link, and may remove the TID of the active link assigned to communication circuit 312 and/or 314 to be assigned to the inactive link. For example, the processor 300 may switch the active link, from which the TID has been removed, to be inactive via power management.

According to an embodiment, based on determination that the designated link switching condition is satisfied, the processor 300 may identify the radio signal state of at least one link which has not been set up but can be additionally set up with respect to the external electronic device 220. For example, the processor 300 may additionally set up at least one link via association (or re-association) with the external electronic device 220. The processor 300 may identify a radio signal state of at least one additionally set-up link.

According to various embodiments, in operation 611, the electronic device (e.g., the electronic device 101) or the processor (e.g., the processor 120 or 300) may reconfigure the active link and the inactive link, based on the radio signal states of the active link and the inactive link, and/or the transmission power limit. According to an embodiment, the processor 300 may detect a signal-to-noise ratio (SNR) of each link as shown in Equation 1, based on a received signal strength (e.g., a received signal strength indicator (RSSI)) of each link.

[Equation 1]

$$SNR_{tone} = 10^{\frac{RSSI + P_{adjust}}{10}}$$

As an example, $SNR_{tone}$ may denote an SNR of a subcarrier included in a link, an RSSI may denote a received signal strength, and $P_{adjust}$ is a parameter for converting a received signal strength into an SNR and may be determined by the electronic device 101.

According to an embodiment, the processor 300 may detect a data rate of each link as shown in Equation 2, based on the SNR of each link in Equation 1.

[Equation 2]

$$DataRate = \min(\log_2(1 + SNR_{tone}), MaxBitsPerSc) \times \frac{NSS_{max} \times Ntone}{DSYM_{DUR}}$$

As an example, datarate may denote a data rate of a link, $SNR_{tone}$ may denote an SNR of a subcarrier included in the link, MaxBitsPerSc is the maximum number of bits transmittable in each subcarrier and may be configured based on a modulation and coding scheme (MCS) level, $NSS_{max}$ may denote the number of spatial streams, $N_{tone}$ may denote the number of subcarriers, and DSYMDUR may denote a symbol duration.

According to an embodiment, the processor 300 may detect a throughput of each link as shown in Equation 3, based on the data rate of each link in Equation 2.

[Equation 3]

$$ET_{UL,i} = DR_{UL,i} \times \frac{255 - CU_i}{255}, \quad ET_{DL,i} = DR_{DL,i} \times \frac{255 - CU_i}{255}$$

As an example, $ET_{UL,i}$ may denote a throughput of an uplink of an i-th link, $DR_{UL,i}$ may denote a data rate of the uplink of the i-th link, $ET_{DL,i}$ may denote a throughput of a downlink of the i-th link, $DR_{DL,i}$ may denote a data rate of the downlink of the i-th link, and $CU_i$ may denote a channel utilization rate of the i-th link. As an example, for the channel utilization, a CCA busy time may be replaced with a value using a ratio of a radio-on-time during CCA measurement.

According to an embodiment, the processor 300 may identify throughputs (e.g., the sum of throughputs) of link combinations supportable by the electronic device 101, based on the throughputs of respective links. For example, the processor 300 may configure, to be the active links, links included in a link combination having a highest throughput (e.g., the sum of throughputs) from among link combinations supportable by the electronic device 101. For example, the processor 300 may configure, to be the active links, links included in a link combination having a highest throughput (e.g., the sum of throughputs) from among link combinations supportable by the electronic device 101, based on the transmission power limit. For example, the processor 300 may configure, to be the inactive link, at least one remaining link that is not configured to be the active link from among the multiple links.

According to an embodiment, the processor 300 may detect an effective link among the active links. The processor 300 may configure, to be the active link, at least one effective link among the at least one link configured to be the active link. At least one link that is not detected as the effective link from among the at least one link configured to be the active link may be configured to be the inactive link. As an example, the effective link may include at least one link having a throughput exceeding a designated reference throughput from among the active links.

According to various embodiments, in operation 613, the electronic device (e.g., the electronic device 101) or the processor (e.g., the processor 120 or 300) may perform wireless LAN communication with the external electronic device, based on the active link among multiple links to the external electronic device. According to an embodiment, the processor 300 may assign, to each link, the communication circuits 312 and/or 314 for controlling each of at least one link configured to be the active link. According to an embodiment, the processor 300 may activate, via TID link mapping (e.g., TID to link mapping) or power management, at least one link (e.g., an effective link) configured to be the active link, and may control the first communication circuit 312 and/or the second communication circuit 314 to inactivate at least one link configured to be the inactive link. According to an embodiment, the processor 300 may control the first communication circuit 312 and/or the second communication circuit 314 to transmit data to and/or receive data from the external electronic device 220 via the active link (e.g., the effective link).

According to various embodiments, if it is determined that a throughput required by the electronic device 101 and/or the external electronic device 220 can be satisfied via at least one effective link, the electronic device 101 (or the processor 300) may perform wireless LAN communication with the external electronic device 220 via the at least one effective link. According to an embodiment, if it is determined that the throughput required by the electronic device 101 and/or the external electronic device 220 can be satisfied via at least a part of at least one effective link, the electronic device 101 (or the processor 300) may perform wireless LAN communication with the external electronic device 220 via at least a part of the at least one effective link. For example, the electronic device 101 (or the processor 300) may configure, to be the inactive links, links that are not used for wireless LAN communication with the external electronic device 220 from among the multiple links.

According to various embodiments, if there is no effective link among the active links or it is determined that the throughput required by the electronic device 101 and/or the external electronic device 220 cannot be satisfied via at least one effective link, the electronic device 101 (or the processor 300) may move (e.g., roaming) wireless LAN communication to another external electronic device. According to an embodiment, when the electronic device 101 detects another accessible external electronic device (e.g., another AP) via scanning, the electronic device 101 (or the processor 300) may switch wireless LAN communication with the external electronic device to that with the another external electronic device. According to an embodiment, if there is no other external electronic device accessible by the electronic device 101, the electronic device 101 (or the processor 300) may determine that wireless LAN communication cannot be provided. The electronic device 101 (or the processor 300) may perform cellular communication based on the determination that wireless LAN communication cannot be provided.

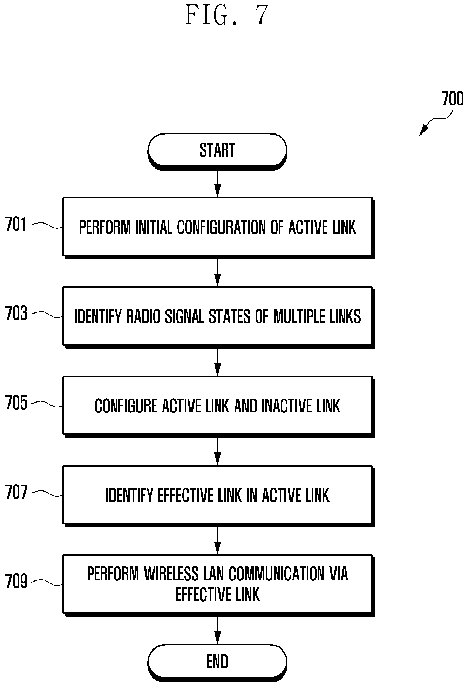

FIG. 7 is a flowchart 700 for initial configuration of an active link in an electronic device according to various embodiments. According to an embodiment, at least a part of FIG. 7 may include detailed operations of operation 603 and operation 605 in FIG. 6. In the following embodiments, respective operations may be sequentially performed, but are not necessarily performed sequentially. For example, the order of respective operations may be changed, and at least two operations may be performed in parallel. As an example, the electronic device of FIG. 7 may be the electronic device 101 of FIG. 1, FIG. 2, FIG. 3, FIG. 4, or FIG. 5.

According to various embodiments referring to FIG. 7, when multiple links (e.g., the first link 231, the second link 232, and/or the third link 233 of FIG. 2) are set up with respect to an external electronic device (e.g., the external electronic device 220 of FIG. 2) (e.g., in operation 601 of FIG. 6), the electronic device (e.g., the electronic device 101 of FIG. 1, FIG. 2, FIG. 3, FIG. 4, or FIG. 5) or the processor (e.g., the processor 120 of FIG. 1 or the processor 300 of FIG. 3) may perform, in operation 701, initial configuration of an active link, based on setting up of the multiple links to the external electronic device. According to an embodiment, when the multiple links are set up with respect to the external electronic device 220 via the first link 231, the processor 300 may configure the first link 231 to be the active link. For example, the processor 300 may additionally configure the randomly selected second link 232 to be the active link from among the second link 232 and the third link 233. For example, the processor 300 may additionally configure the second link 232 to be the active link, based on radio signal states of the second link 232 and the third link 233. As an example, the radio signal states of the second link 232 and the third link 233 may be acquired via a beacon or a probe response frame received via the second link 232 and/or the third link 233 from the external electronic device 220. As an example, the radio signal states of the second link 232 and the third link 233 may be acquired via a separate search for the second link 232 and/or the third link 233. For example, the processor 300 may configure the active link to correspond to the number of links concurrently operable by the electronic device 101 from among the multiple links to the external electronic device 220. As an example, the number of links concurrently operable by the electronic device 101 may be configured based on the communication circuits 312 and/or 314 included in the wireless LAN communication circuit 310.

According to various embodiments, in operation 703, the electronic device (e.g., the electronic device 101) or the processor (e.g., the processor 120 or 300) may identify the radio signal state of each link of the multiple links to the external electronic device, based on completion of setting up of the multiple links to the external electronic device. According to an embodiment, the processor 300 may assign, among the active links, the first link 231 to the first communication circuit 312 and assign the second link 233 to the second communication circuit 314. The processor 300 may identify the radio signal state of the first link 231, based on a signal received from the external electronic device 220 via the first communication circuit 312. The processor 300 may identify the radio signal state of the second link 232, based on a signal received from the external electronic device 220 via the second communication circuit 314.

According to an embodiment, the processor 300 may identify the radio signal state of the third link 233, which is an inactive link, via the first communication circuit 312 or the second communication circuit 314. For example, the processor 300 may select a communication circuit, to which the third link 233 is to be assigned, from among the first communication circuit 312 and the second communication circuit 314, based on frequency bands supportable by the first communication circuit 312 and the second communication circuit 314. If it is determined that the third link 233 is assigned to the second communication circuit 314, the processor 300 may switch the second link 232 to be in an inactive state (e.g., a sleep state) via power management. The processor 300 may switch the third link 233 to be active. The processor 300 may control the second communication circuit 314 to perform a search related to the third link 233 in order to identify the radio signal state of the third link 233. As an example, the processor 300 may assign a TID of the second link 232 to the first link 231 and remove the TID of the second link 232. The processor 300 may switch the second link 232, from which the TID has been removed, to be inactive via power management. As an example, the switching of the second link 232 to be inactive may include a series of operations of configuring a PM bit of "Null data frame" to be a second value (e.g., "1") and perform transmission to the external electronic device 220. As an example, the switching of the third link 233 to be active may include a series of operations of configuring the power management (PM) bit of "Null data frame" to be a first value (e.g., "0") and perform transmission to the external electronic device 220.

According to various embodiments, in operation 705, the electronic device (e.g., the electronic device 101) or the processor (e.g., the processor 120 or 300) may perform configuration to be the active link and the inactive link, based on the transmission power limit and/or the radio signal states of the multiple links (e.g., the first link 231, the second link 232, and/or the third link 233) to the external electronic device. According to an embodiment, the processor 300 may detect (or estimate) a throughput of each link, based on the radio signal state of each of the multiple links. For example, the throughput of the link may be detected based on Equations 1, 2 and 3. For example, the throughput of the link may be determined based on an estimated throughput of each link and a reception speed of each link, as shown in Equation 3. As an example, the throughput of the link may be determined to be a smaller value among the estimated throughput of each link and the reception speed of each link, as shown in Equation 3. For example, the throughput of the link may be determined based on a transmission success rate and the estimated throughput of each link, as shown in Equation 3. As an example, the throughput of the link may be detected based on a product of the estimated throughput of each link and the transmission success rate, as shown in Equation 3. As an example, the transmission success rate may be detected based on the number of times of transmission success and the number of retransmissions. According to an embodiment, the processor 300 may detect throughputs (e.g., the sum of throughputs) of link combinations supportable by the electronic device 101, based on the throughputs of the respective links. For example, the processor 300 may select, as the active links, links included in a link combination having a highest throughput from among link combinations supportable by the electronic device 101. For example, the processor 300 may select, as the active links, links included in a link combination having a highest throughput from among link combinations supportable by the electronic device 101, based on the transmission power limit. As an example, the link combination supportable by the electronic device 101, which is based on the transmission power limit, is a part of link combinations configurable by the multiple links set up between the electronic device 101 and the external electronic device 220, and may include at least one link combination configured so that the sum of transmission powers of at least one link included in the link combination does not exceed a designated reference transmission power. As an example, the designated reference transmission power may be configured based on a specific absorption rate (SAR) or a time averaged SAR (TAR). As an example, the transmission power limit may be applied when a transmission power of a frequency band used for wireless LAN communication is limited. According to an embodiment, the processor 300 may configure the active link and the inactive link, based on a signal quality of each link, which is detected (or estimated) based on at least one of a link transmission and/or reception speed and the number of times of transmission success or the number of retransmissions.

According to various embodiments, in operation 707, the electronic device (e.g., the electronic device 101) or the processor (e.g., the processor 120 or 300) may identify at least one effective link among the active links. According to an embodiment, the processor 300 may determine, to be an effective link, at least one active link having a throughput exceeding a designated reference throughput from among the active links.

According to various embodiments, in operation 709, the electronic device (e.g., the electronic device 101) or the processor (e.g., the processor 120 or 300) may perform wireless LAN communication with the external electronic device via at least one effective link among the active links to the external electronic device. According to an embodiment, the processor 300 may assign, to each link, the communication circuits 312 and/or 314 for controlling each of at least one effective link. According to an embodiment, the processor 300 may activate at least one effective link via TID link mapping or power management. The processor 300 may control the first communication circuit 312 and/or the second communication circuit 314 to transmit data to and/or receive data from the external electronic device 220 via at least one effective link. As an example, at least one link configured to be the inactive link may be inactivated via TID link mapping or power management. As an example, at least one link configured to be the inactive link may include at least one link remaining after excluding the effective link from the multiple links to the external electronic device 220.

According to an embodiment, if it is determined that a throughput required by the electronic device 101 and/or the external electronic device 220 can be satisfied via at least one effective link, the processor 300 may control the first communication circuit 312 and/or the second communication circuit 314 to perform wireless LAN communication with the external electronic device 220 via the at least one effective link. According to an embodiment, if it is determined that a throughput required by the electronic device 101 and/or the external electronic device 220 can be satisfied via at least a part of at least one effective link, the electronic device 101 (or processor 300) may control the first communication circuit 312 and/or the second communication circuit 314 to perform wireless LAN communication with the external electronic device 220 via at least a part of the at least one effective link. According to an embodiment, the electronic device 101 (or the processor 300) may configure, to be the inactive link, at least one link that is not used for wireless LAN communication with the external electronic device 220 from among the multiple links.

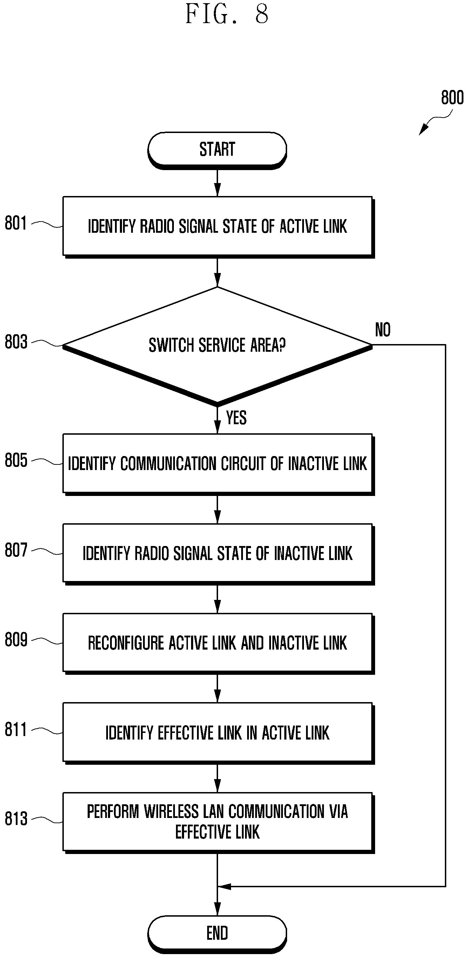

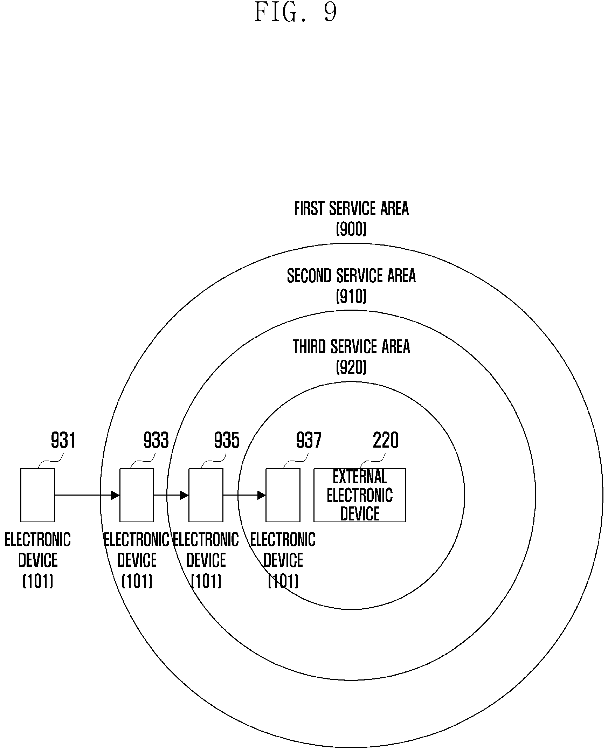

FIG. 8 is a flowchart 800 for reconfiguring an active link in an electronic device according to various embodiments. According to an embodiment, at least a part of FIG. 8 may include detailed operations of operation 607 to operation 613 in FIG. 6. In the following embodiments, respective operations may be sequentially performed, but are not necessarily performed sequentially. For example, the order of respective operations may be changed, and at least two operations may be performed in parallel. For example, the electronic device of FIG. 8 may be the electronic device 101 of FIG. 1, FIG. 2, FIG. 3, FIG. 4, or FIG. 5. As an example, at least a part of FIG. 8 may be described with reference to FIG. 9. FIG. 9 is an example of a service area of each link in the wireless LAN system according to various embodiments.

According to various embodiments referring to FIG. 8 and FIG. 9, in operation 801, an electronic device (e.g., the electronic device 101 of FIG. 1, FIG. 2, FIG. 3, FIG. 4, or FIG. 5) or a processor (e.g., the processor 120 of FIG. 1 or the processor 300 of FIG. 3) may identify a radio signal state of an active link. According to an embodiment, when wireless LAN communication with the external electronic device 220 is performed via the active link, the processor 300 may identify a radio signal state of the active link, based on a designated period.

According to various embodiments, in operation 803, the electronic device (e.g., the electronic device 101) or the processor (e.g., the processor 120 or 300) may identify, based on the radio signal state of the active link, whether a service area in which the electronic device 101 is located is switched. According to an embodiment, as in FIG. 9, for the service area of the external electronic device 220, each link (e.g., the first link 231, the second link 232, and/or the third link 233) may have a service area with a different size based on a frequency band supported by each link. For example, a first service area 900 of the first link 231 supporting a first frequency band (e.g., a band of about 2.4 GHz) may be larger than a second service area 910 of the second link 232 supporting a second frequency band (e.g., a band of about 5 GHz) and a third service area 920 of the third link 233 supporting a third frequency band (e.g., a band of about 6 GHz). For example, the second service area 910 of the second link 232 supporting the second frequency band (e.g., a band of about 5 GHz) may be smaller than the first service area 900 of the first link 231 supporting the first frequency band (e.g., a band of about 2.4 GHz) and may be larger than the third service area 920 of the third link 233 supporting the third frequency band (e.g., a band of about 6 GHz). For example, the third service area 920 of the third link 233 supporting the third frequency band (e.g., a band of about 6 GHz) may be smaller than the first service area 900 of the first link 231 supporting the first frequency band (e.g., a band of about 2.4 GHz) and the second service area 910 of the second link 232 supporting the second frequency band (e.g., a band of about 5 GHz).

According to an embodiment, if the electronic device 101 is located outside the first service area 900 in reference numeral 931, signals (e.g., beacons) of the first link 231, the second link 232, and the third link 233 may not be received, or a signal quality of the first link 231 may be relatively degraded. If the electronic device 101 is located outside the second service area 910 but within the first service area 900 in reference numeral 933, the signal quality of the first link 231 may be relatively better than that of the second link 232 and that of the third link 233. If the electronic device 101 is located outside the third service area 920 but within the second service area 910 in reference numeral 935, the signal qualities of the first link 231 and the second link 232 may be relatively better than the signal quality of the third link 233. If the electronic device 101 is located within the third service area 920 in reference numeral 937, the signal qualities of the second link 232 and the third link 233 may be relatively better than the signal quality of the first link 231.

According to an embodiment, based on a difference in the signal qualities of the service areas 900, 910, and/or 920 of the external electronic device 220, the processor 300 may identify whether the service area of the external electronic device 220, in which the electronic device 101 is located, is changed based on a throughput of each link or a received signal strength. For example, the processor 300 may identify whether the service area of the external electronic device 220, in which the electronic device 101 is located, is changed, based on a reference value of a received signal strength of each link to the service areas defined as in Table 1. For example, if, at a first time point, a received signal strength of the first link 231 exceeds about -85 dBm, and signals of the second link 232 and the third link 233 are not received, the processor 300 may determine that the electronic device 101 is located outside the second service area 910 but within the first service area 900. If, at a second time point, a received signal strength of the first link 231 exceeds about -75 dBm, a received signal strength of the second link 232 exceeds about -85 dBm, and a signal of the third link 233 is not received, the processor 300 may determine that the electronic device 101 has moved into the second service area 910. If, at a third time point, a received signal strength of the first link 231 exceeds about -65 dBm, a received signal strength of the second link 232 exceeds about -75 dBm, and a received signal strength of the third link 233 exceeds about -85 dBm, the processor 300 may determine that the electronic device 101 has moved into the third service area 920.

[Table 1]

| Received signal strength | First service area | Second service area | Third service area |
|---|---|---|---|
| First link reference value | about -85 dBm | about -75 dBm | about -65 dBm |
| Second link reference value | NA | about -85 dBm | about -75 dBm |
| Third link reference value | NA | NA | about -85 dBm |

For example, the processor 300 may identify whether the service area of the external electronic device 220, in which the electronic device 101 is located, is changed, based on a reference value of a throughput of each link to the service areas defined as in Table 1.

[Table 2]

| Throughput | First service area | Second service area | Third service area |
|---|---|---|---|
| First link reference value | about 1% of peak rate | about 10% of peak rate | about 30% of peak rate |
| Second link reference value | NA | about 1% of peak rate | about 10% of peak rate |
| Third link reference value | NA | NA | about 1% of peak rate |

According to various embodiments, if the service area in which the electronic device 101 is located is not switched (e.g., "No" in operation 803), the electronic device (e.g., the electronic device 101) or the processor (e.g., the processor 120 or 300) may terminate an embodiment for reconfiguration of the active link.

According to various embodiments, if the service area in which the electronic device 101 is located is switched (e.g., "Yes" in operation 803), the electronic device (e.g., the electronic device 101) or the processor (e.g., the processor 120 or 300) may identify a communication circuit of the inactive link in operation 805. According to an embodiment, the processor 300 may select a communication circuit to which the inactive link is to be assigned, based on frequency bands supported by the first communication circuit 312 and the second communication circuit 314. For example, if the wireless LAN communication circuit 310 is configured as shown in FIG. 4, the processor 300 may assign the third link 233, which is the inactive link, to the second communication circuit 314.

According to various embodiments, in operation 807, the electronic device (e.g., the electronic device 101) or the processor (e.g., the processor 120 or 300) may identify the radio signal state of the inactive link by using the communication circuit to which the inactive link is assigned.

According to an embodiment, if the third link 233, which is the inactive link, is assigned to the second communication circuit 314, the processor 300 may switch the second link 232 to be inactive via power management. For example, the processor 300 may assign a TID of the second link 232 to the first link 231 and remove the TID of the second link 232. The processor 300 may switch the second link 232, from which the TID has been removed, to be inactive via power management. As an example, the switching of the second link 232 to be inactive may include a series of operations of configuring a PM bit of "Null data frame" to be a second value (e.g., "1") and perform transmission to the external electronic device 220.

According to an embodiment, the processor 300 may switch the third link 233 to be active. As an example, the switching of the third link 233 to be active may include a series of operations of configuring the power management (PM) bit of "Null data frame" to be a first value (e.g., "0") and perform transmission to the external electronic device 220.

According to an embodiment, the processor 300 may control the second communication circuit 314 to perform a search related to the third link 233 in order to identify the radio signal state of the third link 233.

According to an embodiment, the processor 300 may identify the radio signal state of at least one link which has not been set up but can be additionally set up with respect to the external electronic device 220. For example, the processor 300 may additionally set up at least one link via association (or re-association) with the external electronic device 220. The processor 300 may identify a radio signal state of at least one additionally set-up link.

According to various embodiments, in operation 809, the electronic device (e.g., the electronic device 101) or the processor (e.g., the processor 120 or 300) may reconfigure the active link and the inactive link, based on a transmission power limit and/or radio signal states of the multiple links (e.g., the first link 231, the second link 232, and/or the third link 233) to the external electronic device. According to an embodiment, the processor 300 may detect (or estimate) throughputs of the respective links by applying the radio signal states of the respective multiple links to Equations 1, 2, and 3. The processor 300 may detect throughputs (e.g., the sum of the throughputs) of link combinations supportable by the electronic device 101, based on the throughputs of the respective links. The processor 300 may select, as the active links, links included in a link combination having a highest throughput from among the link combinations supportable by the electronic device 101. As an example, a combination of links supportable by the electronic device 101 may be configured based on frequency bands supported by the first communication circuit 312 and the second communication circuit 314. For example, the best combination may include a combination having a highest throughput from among the link combinations supportable by the electronic device 101, based on the transmission power limit.

According to various embodiments, in operation 811, the electronic device (e.g., the electronic device 101) or the processor (e.g., the processor 120 or 300) may detect an effective link from the active links. According to an embodiment, the processor 300 may detect at least one effective link by comparing a designated reference throughput with the throughput of at least one link selected as the active link. As an example, the effective link may include at least one link having a throughput exceeding the designated reference throughput.

According to an embodiment, the processor 300 may update the active link, based on information on the effective link. For example, the processor 300 may configure, to be the active link, at least one link detected as the effective link among the links selected as the active links. At least one remaining link that is not detected as the effective link from among the links selected as the active links may be switched to the inactive link.

According to various embodiments, in operation 813, the electronic device (e.g., the electronic device 101) or the processor (e.g., the processor 120 or 300) may perform wireless LAN communication with the external electronic device via at least one effective link configured to be the active link. According to an embodiment, the processor 300 may assign, to each link, the communication circuits 312 and/or 314 for controlling each of at least one link configured to be the active link. According to an embodiment, the processor 300 may activate at least one effective link configured to be the active link, via TID link mapping or power management. The processor 300 may control the first communication circuit 312 and/or the second communication circuit 314 to transmit data to and/or receive data from the external electronic device 220 via at least one effective link. As an example, at least one link configured to be the inactive link may be inactivated via TID link mapping or power management.

According to an embodiment, if it is determined that a throughput required by the electronic device 101 and/or the external electronic device 220 can be satisfied via at least one effective link, the processor 300 may control the first communication circuit 312 and/or the second communication circuit 314 to perform wireless LAN communication with the external electronic device 220 via the at least one effective link. According to an embodiment, if it is determined that a throughput required by the electronic device 101 and/or the external electronic device 220 can be satisfied via at least a part of at least one effective link, the electronic device 101 (or processor 300) may control the first communication circuit 312 and/or the second communication circuit 314 to perform wireless LAN communication with the external electronic device 220 via at least a part of the at least one effective link. According to an embodiment, the electronic device 101 (or the processor 300) may configure, to be an inactive link, at least one link that is not used for wireless LAN communication with the external electronic device 220 from among the multiple links.

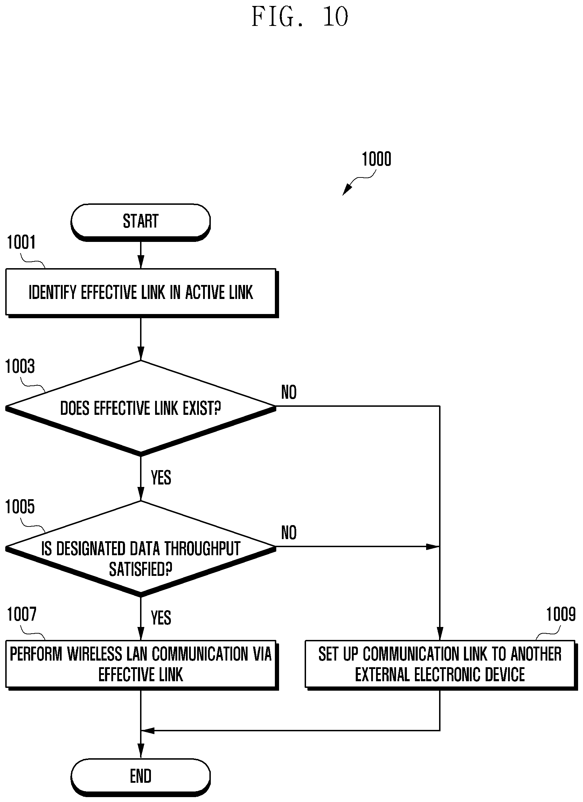

FIG. 10 is a flowchart 1000 for performing wireless LAN communication via an effective link in an electronic device according to various embodiments. According to an embodiment, at least a part of FIG. 10 may include detailed operations of operation 605 or operation 613 of FIG. 6, operation 707 and operation 709 of FIG. 7, or operation 811 and operation 813 of FIG. 8. In the following embodiments, respective operations may be sequentially performed, but are not necessarily performed sequentially. For example, the order of respective operations may be changed, and at least two operations may be performed in parallel. As an example, the electronic device of FIG. 10 may be the electronic device 101 of FIG. 1, FIG. 2, FIG. 3, FIG. 4, or FIG. 5.

According to various embodiments referring to FIG. 10, when active links among multiple links (e.g., the first link 231, the second link 232, and/or the third link 233 of FIG. 2) to an external electronic device (e.g., the external electronic device 220 of FIG. 1) are configured (or reconfigured) (e.g., operation 603 or operation 611 of FIG. 6, operation 705 of FIG. 7, or operation 809 of FIG. 8), the electronic device (e.g., the electronic device 101 of FIG. 1, FIG. 2, FIG. 3, FIG. 4, or FIG. 5) or a processor (e.g., the processor 120 of FIG. 1 or the processor 300 of FIG. 3) may identify, in operation 1001, at least one effective link among the configured active links, based on radio signal states. According to an embodiment, the effective link may include at least one active link having a throughput exceeding a designated reference throughput from among the active links.

According to various embodiments, in operation 1003, the electronic device (e.g., the electronic device 101) or the processor (e.g., the processor 120 or 300) may identify whether at least one effective link has been detected from the configured active links, based on the radio signal states.

According to various embodiments, if at least one effective link has been detected (e.g., "Yes" in operation 1003), the electronic device (e.g., the electronic device 101) or the processor (e.g., the processor 120 or 300) may identify, in operation 1005, whether a designated data throughput can be satisfied via the at least one effective link. For example, a state of the designated data throughput being satisfied may include a state in which a throughput of at least one effective link exceeds a throughput required by the electronic device 101 and/or the external electronic device 220. For example, a state of the designated data throughput not being satisfied may include a state in which the throughput of at least one effective link is equal to or lower than the throughput required by the electronic device 101 and/or the external electronic device 220.

According to various embodiments, if it is determined that the designated data throughput can be satisfied via at least one effective link (e.g., "Yes" in operation 1005), the electronic device (e.g., the electronic device 101) or the processor (e.g., the processor 120 or 300) may perform, in operation 1007, wireless LAN communication with the external electronic device (e.g., the external electronic device 220) via the at least one effective link.

According to various embodiments, if no effective link has been detected (e.g., "No" in operation 1003) or it is determined that the designated data throughput cannot be satisfied via at least one effective link (e.g., "No" in operation 1005), the electronic device (e.g., the electronic device 101) or the processor (e.g., the processor 120 or 300) may perform, in operation 1009, wireless LAN communication with another external electronic device. According to an embodiment, if there is no effective link among the active links or it is determined that the designated data throughput cannot be satisfied via at least one effective link, the processor 300 may identify, via scanning, whether another external electronic device (e.g., another AP) accessible by the electronic device 101 exists. According to an embodiment, if there is another external electronic device accessible by the electronic device 101, the processor 300 may control the communication circuit 310 to set up a communication link to the another external electronic device. The processor 300 may control the communication circuit 310 to perform wireless LAN communication via the communication link to the another external electronic device.

According to various embodiments, if there is no other external electronic device accessible by the electronic device 101, the electronic device 101 (or the processor 300) may determine that the electronic device 101 cannot provide wireless LAN communication. The electronic device 101 (or the processor 300) may perform cellular communication based on the determination that wireless LAN communication cannot be provided.

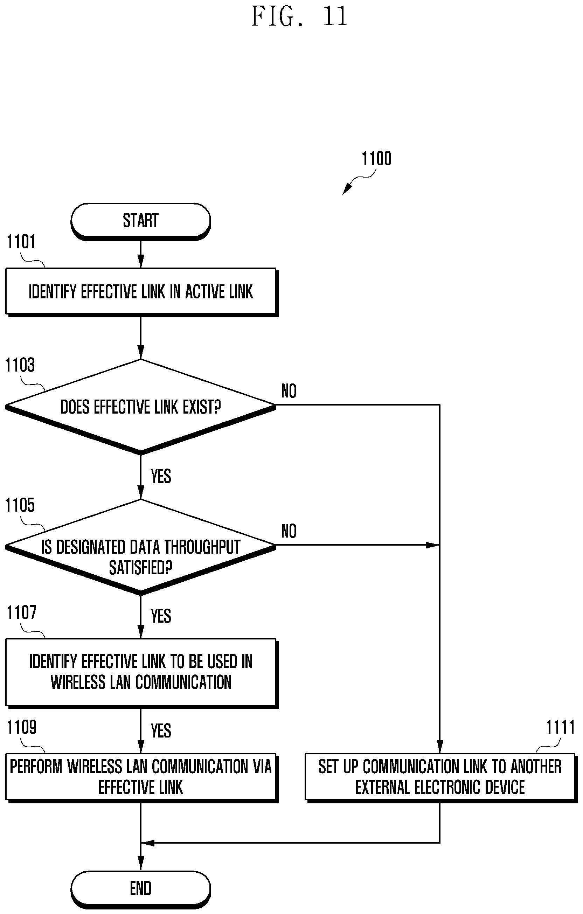

FIG. 11 is a flowchart 1100 for performing wireless LAN communication via at least a part of effective links in an electronic device according to various embodiments. According to an embodiment, at least a part of FIG. 11 may include detailed operations of operation 605 or operation 613 of FIG. 6, operation 707 and operation 709 of FIG. 7, or operation 811 and operation 813 of FIG. 8. In the following embodiments, respective operations may be sequentially performed, but are not necessarily performed sequentially. For example, the order of respective operations may be changed, and at least two operations may be performed in parallel. As an example, the electronic device of FIG. 11 may be the electronic device 101 of FIG. 1, FIG. 2, FIG. 3, FIG. 4, or FIG. 5.

According to various embodiments referring to FIG. 11, when active links among multiple links (e.g., the first link 231, the second link 232, and/or the third link 233 of FIG. 2) to an external electronic device (e.g., the external electronic device 220 of FIG. 1) are configured (or reconfigured) (e.g., operation 603 or operation 611 of FIG. 6, operation 705 of FIG. 7, or operation 809 of FIG. 8), the electronic device (e.g., the electronic device 101 of FIG. 1, FIG. 2, FIG. 3, FIG. 4, or FIG. 5) or a processor (e.g., the processor 120 of FIG. 1 or the processor 300 of FIG. 3) may identify, in operation 1101, at least one effective link among the configured active links, based on radio signal states. According to an embodiment, the processor 300 may identify (or select), to be an effective link, at least one active link having a throughput exceeding a designated reference throughput from among the active links.

According to various embodiments, in operation 1103, the electronic device (e.g., the electronic device 101) or the processor (e.g., the processor 120 or 300) may identify whether at least one effective link has been detected from the configured active links, based on the radio signal states.

According to various embodiments, if at least one effective link has been detected (e.g., "Yes" in operation 1103), the electronic device (e.g., the electronic device 101) or the processor (e.g., the processor 120 or 300) may identify, in operation 1105, whether a designated data throughput can be satisfied via the at least one effective link. For example, a state of the designated data throughput being satisfied may include a state in which a throughput of at least one effective link exceeds a throughput required by the electronic device 101 and/or the external electronic device 220. For example, a state of the designated data throughput not being satisfied may include a state in which the throughput of at least one effective link is equal to or lower than the throughput required by the electronic device 101 and/or the external electronic device 220.

According to various embodiments, if it is determined that the designated data throughput can be satisfied via at least one effective link (e.g., "Yes" in operation 1105), the electronic device (e.g., the electronic device 101) or the processor (e.g., the processor 120 or 300) may identify (or select), in operation 1107, an effective link to be used for wireless LAN communication with the external electronic device (e.g., the external electronic device 220) from among the at least one effective link. According to an embodiment, if multiple effective links are detected, the processor 300 may detect throughputs (e.g., the sum of throughputs) of effective link combinations supportable by the electronic device 101, based on throughputs of the effective links. The processor 300 may detect at least one effective link combination that exceeds a size of data to be transmitted and/or received to and/or from the external electronic device 220 from among the effective link combinations supportable by the electronic device 101. The processor 300 may select an effective link combination that satisfies a designated selection condition from among at least one effective link combination exceeding the size of data to be transmitted and/or received to and/or from the external electronic device 220. As an example, the effective link combination that satisfies the designated selection condition may include an effective link combination having the minimum number of effective links included in the effective link combination. As an example, if the number of effective links included in the effective link combination is the same, the effective link combination that satisfies the specified selection condition may include an effective link combination having a highest throughput of the effective link combination.

According to various embodiments, in operation 1109, the electronic device (e.g., the electronic device 101) or the processor (e.g., the processor 120 or 300) may perform wireless LAN communication with the external electronic device (e.g., the external electronic device 220) via the effective link to be used for wireless LAN communication with the external electronic device (e.g., the external electronic device 220). According to an embodiment, the processor 300 may control the communication circuit 310 to perform wireless LAN communication with the external electronic device (e.g., the external electronic device 220) via at least one effective link included in the effective link combination satisfying the designated selection condition.

According to various embodiments, if no effective link has been detected (e.g., "No" in operation 1103) or it is determined that the designated data throughput cannot be satisfied via at least one effective link (e.g., "No" in operation 1105), the electronic device (e.g., the electronic device 101) or the processor (e.g., the processor 120 or 300) may perform, in operation 1109, wireless LAN communication with another external electronic device. According to an embodiment, if there is no effective link among the active links or it is determined that the designated data throughput cannot be satisfied via at least one effective link, the processor 300 may identify, via scanning, whether another external electronic device (e.g., another AP) accessible by the electronic device 101 exists. According to an embodiment, if there is another external electronic device accessible by the electronic device 101, the processor 300 may control the communication circuit 310 to set up a communication link to the another external electronic device. The processor 300 may control the communication circuit 310 to perform wireless LAN communication via the communication link to the another external electronic device.

According to various embodiments, if there is an effective link that is not used for wireless LAN communication with the external electronic device 220 from among the at least one effective link, the electronic device 101 (or the processor 300) may configure, to be an inactive link, the effective link that is not used for wireless LAN communication with the external electronic device 220. According to an embodiment, the electronic device 101 (or the processor 300) may configure, to be inactive, the effective link that is not used for wireless LAN communication with the external electronic device 220, via TID link mapping and/or power management.

According to various embodiments, if there is no other external electronic device accessible by the electronic device 101, the electronic device 101 (or the processor 300) may determine that the electronic device 101 cannot provide wireless LAN communication. The electronic device 101 (or the processor 300) may perform cellular communication based on the determination that wireless LAN communication cannot be provided.

According to various embodiments, an operation method of an electronic device (e.g., the electronic device 101 of FIG. 1, FIG. 2, FIG. 3, FIG. 4, or FIG. 5) may include setting up multiple links for wireless LAN communication with an external electronic device (e.g., the electronic device 102 of FIG. 1 or the external electronic device 220 of FIG. 2). According to an embodiment, the operation method of the electronic device may include configuring, to be an active link, at least one link among the multiple links and configuring at least one other link to be an inactive link. According to an embodiment, the operation method of the electronic device may include transmitting data to and/or receiving data from the external electronic device via the active link. According to an embodiment, the operation method of the electronic device may include identifying a radio signal state of the inactive link if it is determined to perform link switching, based on a radio signal state of the active link. According to an embodiment, the operation method of the electronic device may include, based on the radio signal states of the active link and the inactive link, reconfiguring an active link and an inactive link of the multiple links, and transmitting data to and/or receiving data from the external electronic device via the reconfigured active link.

According to various embodiments, the configuring to be the inactive link may include, based on the number of communication circuits supporting wireless LAN communication in the electronic device, configuring, to be the active link, at least one link among the multiple links and configuring, to be the inactive link, at least one link remaining after excluding the active link from the multiple links.

According to various embodiments, the configuring to be the inactive link may include configuring, to be the active link, at least one link among the multiple links, which is used for setting up of the multiple links, additionally configuring, to be the active link, at least one random link among at least one link that is not used for setting up of the multiple links, and configuring, to be the inactive link, at least one link that is not configured to be the active link from among the multiple links.

According to various embodiments, the operation method of the electronic device may include identifying the radio signal states of the active link and the inactive link, based on completion of setting up of the multiple links, configuring, to be the active link, at least one link among the multiple links, based on the radio signal states of the active link and the inactive link, and configuring at least one other link to be the inactive link.

According to various embodiments, the identifying of the radio signal state of the inactive link may include identifying a communication circuit, to which the inactive link is to be assigned, from among the communication circuits for wireless LAN communication in the electronic device, switching, to be inactive, an active link assigned to the communication circuit to which the inactive link is to be assigned, and identifying the radio signal state of the inactive link via a search related to the inactive link via the communication circuit.

According to various embodiments, the switching of the active link to be inactive may include assigning, via TID link mapping (e.g., TID to link mapping), a TID of the active link assigned to the communication circuit, to which the inactive link is to be assigned, to another active link, removing the TID of the active link assigned to the communication circuit to which the inactive link is to be assigned, and switching, to be inactive, the active link from which the TID has been removed.

According to various embodiments, the switching of the active link to be inactive may include configuring, to be a designated first value, a power management bit of a frame related to power management of the active link assigned to the communication circuit to which the inactive link is to be assigned, so as to perform transmission to the external electronic device, wherein the active link assigned to the communication circuit to which the inactive link is to be assigned is switched to be inactive, based on the configuration to be the designated first value.

According to various embodiments, the configuring to be the inactive link may include identifying a throughput of each of the multiple links, based on the radio signal states of the active link and the inactive link, identifying, based on the throughput of each of the multiple links, throughputs of respective link combinations supportable by the electronic device, configuring, to be the active link, at least one link included in a link combination having a highest throughput from among the link combinations, and configuring at least one other link to be the inactive link.

According to various embodiments, the transmitting and/or receiving of data to and/or from the external electronic device via the active link may include detecting at least one effective link, based on a throughput of each of at least one active link included in the link combination having the highest throughput, and if it is determined that a throughput required by the electronic device and/or the external electronic device can be satisfied via the at least one effective link, transmitting data to and/or receiving data from the external electronic device via the at least one effective link.

According to various embodiments, the operation method of the electronic device may include transmitting data to and/or receiving data from the external electronic device via at least a part of the at least one effective link selected based on a data size for transmission and/or reception by the electronic device and/or the external electronic device.

According to various embodiments, the operation method of the electronic device may include, if the at least one effective link is not detected, or it is determined that the throughput required by the electronic device and/or the external electronic device cannot be satisfied via the at least one effective link, performing access to another external electronic device or switching to a cellular network.

According to various embodiments, the operation method of the electronic device may include, based on the radio signal state of the active link, identifying whether a service area of the external electronic device, in which the electronic device is located, is changed, and determining that link switching is performed, based on determination that the service area of the external electronic device, in which the electronic device is located, has been changed.

According to various embodiments, the radio signal state may include at least one of information on the standards of wireless LAN communication, the number of spatial streams allowed by the external electronic device, information on a transmission power of the external electronic device, the number of spatial streams allowed by the electronic device, a received signal strength, a link transmission and/or reception speed, a channel utilization rate, a CCA busy time, a radio on time, a transmit power, and the number of times of transmission success or the number of retransmissions.

According to various embodiments, the operation method of the electronic device may include, based on the radio signal state of the active link, if it is determined that link switching is performed, additionally setting up at least one link which has not been set up but can be additionally set up with respect to the external electronic device. According to an embodiment, the operation method of the electronic device may include identifying a radio signal state of at least one additionally set-up link. According to an embodiment, the operation method of the electronic device may include reconfiguring an active link and an inactive link of the multiple links to the external electronic device, based on the radio signal state of the active link and the radio signal state of the additionally set-up at least one link.

According to various embodiments, the operation method of the electronic device may include identifying whether there is at least one communication circuit to which the active link is not assigned, before reconfiguration of the active link and the inactive link from among multiple communication circuits supporting wireless LAN communication in the electronic device. The operation method of the electronic device may include, if there is at least one communication circuit to which the active link is not assigned, identifying whether there is another link reconfigured to be an active link via reconfiguration of the active link and the inactive link from among the at least one other link. The operation method of the electronic device may include, if there is another link reconfigured to be the active link, switching, to the active link, the another link reconfigured to be the active link via at least one communication circuit to which the active link is not assigned. The operation method of the electronic device may include, if there is a link reconfigured to be an inactive link via reconfiguration of the active link and the inactive link among the at least one link, switching, to the inactive link, the link reconfigured to be the inactive link, based on switching to the active link.

The embodiments of the disclosure provided in the specification and the drawings present specific examples to easily explain the technical contents according to the embodiments and to help understanding of the embodiments, and are not intended to limit the scope of the disclosure. Therefore, the scope of various embodiments of the disclosure should be interpreted to include all modifications or modified forms derived based on the technical spirit of various embodiments, in addition to the embodiments disclosed herein.

## Claims

1.   An electronic device comprising:

at least one communication circuit supporting wireless LAN communication; and
a processor operatively connected to the communication circuit,
wherein the processor is configured to:

set up multiple links to an external electronic device via the at least one communication circuit;
via the at least one communication circuit, configure, to be an active link, at least one link among the multiple links, and configure at least one other link to be an inactive link;
transmit data to and/or receive data from the external electronic device via the active link;
in case of determining to perform link switching, based on a radio signal state of the active link, identify a radio signal state of the inactive link;
based on the radio signal states of the active link and the inactive link, reconfigure an active link and an inactive link of the multiple links; and
transmit data to and/or receive data from the external electronic device via the reconfigured active link.

2.   The electronic device of claim 1, wherein the processor is configured to:

based on the number of the at least one communication circuit, configure, to be the active link, at least one link among the multiple links; and
configure, to be the inactive link, at least one link remaining after excluding the active link from the multiple links.

3.   The electronic device of claim 1, wherein the processor is configured to:

configure, to be the active link, at least one link among the multiple links, which is used for setting up of the multiple links;
additionally configure, to be the active link, at least one random link among at least one link that is not used for setting up of the multiple links; and
configure, to be the inactive link, at least one link that is not configured to be the active link from among the multiple links.

4.   The electronic device of claim 3, wherein the processor is configured to:

based on completion of setting up of the multiple links, identify the radio signal states of the active link and the inactive link; and
based on the radio signal states of the active link and the inactive link, configure, to be the active link, at least one link among the multiple links, and configure at least one other link to be the inactive link.

5.   The electronic device of claim 4, wherein the processor is configured to:

identify a communication circuit to which the inactive link is to be assigned;

switch, to be inactive, an active link assigned to the communication circuit to which the inactive link is to be assigned; and

identify the radio signal state of the inactive link via a search related to the inactive link via the communication circuit.

6. The electronic device of claim 5, wherein the processor is configured to:

via TID link mapping (e.g., TID to link mapping), assign, to another active link, a TID of the active link assigned to the communication circuit to which the inactive link is to be assigned;

remove the TID of the active link assigned to the communication circuit to which the inactive link is to be assigned; and

switch, to be inactive, the active link from which the TID has been removed.

7. The electronic device of claim 5, wherein the processor is configured to configure, to be a designated first value, a power management bit of a frame related to power management of the active link assigned to the communication circuit to which the inactive link is to be assigned, so as to perform transmission to the external electronic device, wherein the active link assigned to the communication circuit to which the inactive link is to be assigned is switched to be inactive, based on the configuration to be the designated first value.

8. The electronic device of claim 4, wherein the processor is configured to:

based on the radio signal states of the active link and the inactive link, identify a throughput of each of the multiple links;

based on the throughput of each of the multiple links, identify throughputs of respective link combinations supportable by the electronic device; and

configure, to be the active link, at least one link included in a link combination having a highest throughput from among the link combinations, and configure at least one other link to be the inactive link.

9. The electronic device of claim 8, wherein the processor is configured to:

detect at least one effective link, based on a throughput of each of the at least one active link included in the link combination having the highest throughput; and

in case of determining that a throughput required by the electronic device and/or the external electronic device can be satisfied via the at least one effective link, transmit data to and/or receive data from the external electronic device via the at least one effective link.

10. The electronic device of claim 9, wherein the processor is configured to, in case that the at least one effective link is not detected, or it is determined that the throughput required by the electronic device and/or the external electronic device cannot be satisfied via the at least one effective link, perform access to another external electronic device or perform switching to a cellular network.

11. An operation method of an electronic device, the method comprising:

setting up multiple links for wireless LAN communication with an external electronic device;

configuring, to be an active link, at least one link among the multiple links, and configuring at least one other link to be an inactive link;

transmitting data to and/or receiving data from the external electronic device via the active link;

in case of determining to perform link switching, based on a radio signal state of the active link, identifying a radio signal state of the inactive link;

based on the radio signal states of the active link and the inactive link, reconfiguring an active link and an inactive link of the multiple links; and

transmitting data to and/or receiving data from the external electronic device via the reconfigured active link.

12. The method of claim 11, further comprising:

identifying whether there is at least one communication circuit, to which the active link is not assigned, before reconfiguration of the active link and the inactive link from among multiple communication circuits supporting wireless LAN communication in the electronic device;

in case that there is at least one communication circuit to which the active link is not assigned, identifying whether there is another link reconfigured to be an active link via reconfiguration of the active link and the inactive link from among the at least one other link;

in case that there is another link reconfigured to be the active link, switching, to the active link, the another link reconfigured to be the active link via at least one communication circuit to which the active link is not assigned; and

in case that there is a link reconfigured to be an inactive link via reconfiguration of the active link and the inactive link among the at least one link, switching, to the inactive link, the link reconfigured to be the inactive link, based on switching to the active link.

13. The method of claim 11, wherein the configuring to be the inactive link comprises:

configuring, to be the active link, at least one link among the multiple links, which is used for setting up of the multiple links;

additionally configuring, to be the active link, at least one random link among at least one link that is not used for setting up of the multiple links; and

configuring, to be the inactive link, at least one link that is not configured to be the active link from among the multiple links.

14. The method of claim 13, further comprising:

based on completion of setting up of the multiple links, identifying the radio signal states of the active link and the inactive link; and

based on the radio signal states of the active link and the inactive link, configuring, to be the active link, at least one link among the multiple links, and configuring at least one other link to be the inactive link.

15. The method of claim 14, wherein the identifying of the radio signal state of the inactive link comprises:

identifying a communication circuit, to which the inactive link is to be assigned, among the communication circuits for wireless LAN communication in the electronic device;

switching, to be inactive, an active link assigned to the communication circuit to which the inactive link is to be assigned; and

identifying the radio signal state of the inactive link via a search related to the inactive link via the communication circuit.

# FIG. 1

**ELECTRONIC DEVICE 101** — 100

- INPUT MODULE 150
- SOUND OUTPUT MODULE 155
- BATTERY 189
- POWER MANAGEMENT MODULE 188
- DISPLAY MODULE 160
- MEMORY 130
  - VOLATILE MEMORY 132
  - NON-VOLATILE MEMORY 134
    - INTERNAL MEMORY 136
    - EXTERNAL MEMORY 138
- PROCESSOR 120
  - MAIN PROCESSOR 121
  - AUXILIARY PROCESSOR 123
- COMMUNICATION MODULE 190
  - WIRELESS COMMUNICATION MODULE 192
  - WIRED COMMUNICATION MODULE 194
- SUBSCRIBER IDENTIFICATION MODULE 196
- ANTENNA MODULE 197
- AUDIO MODULE 170
- SENSOR MODULE 176
- INTERFACE 177
- CONNECTION TERMINAL 178
- HAPTIC MODULE 179
- CAMERA MODULE 180

**PROGRAM 140**
- APPLICATION 146
- MIDDLEWARE 144
- OPERATING SYSTEM 142

SECOND NETWORK 199

ELECTRONIC DEVICE 104

FIRST NETWORK 198

ELECTRONIC DEVICE 102

SERVER 108

# FIG. 2

200

| | | |
|---|---|---|
| 101 | | 220 |

ELECTRONIC DEVICE

EXTERNAL ELECTRONIC DEVICE

231
FIRST LINK

211 — STA 1  ⟷  AP 1 — 221

232
SECOND LINK

212 — STA 2  ⟷  AP 2 — 222

233
THIRD LINK

213 — STA 3  ⟷  AP 3 — 223

# FIG. 3

# FIG. 4

FIG. 4

Ant 1  400

Ant 2  402

FIRST DIPLEXER  410

SECOND DIPLEXER  412

FIRST FREQUENCY BAND

SECOND FREQUENCY BAND AND THIRD FREQUENCY BAND

FIRST FREQUENCY BAND

SECOND FREQUENCY BAND AND THIRD FREQUENCY BAND

FIRST FEM  420

SECOND FEM  422

THIRD FEM  424

FOURTH FEM  426

310

FIRST COMMUNICATION CIRCUIT  312

SECOND COMMUNICATION CIRCUIT  314

EP 4 539 588 A1

# FIG. 5

FIG. 5

400

Ant 1

410

FIRST
DIPLEXER

FIRST FREQUENCY BAND ─────────────── 420 FIRST FEM

500

SECOND FREQUENCY
BAND AND ───── FIRST
SWITCH ───── 510 FIFTH FEM

THIRD FREQUENCY BAND ───── 422 SECOND FEM

402

Ant 2

412

SECOND
DIPLEXER

FIRST FREQUENCY BAND ─────────────── 424 THIRD FEM

502

SECOND FREQUENCY
BAND AND ───── SECOND
SWITCH ───── 512 SIXTH FEM

THIRD FREQUENCY BAND ───── 426 FOURTH FEM

310

312 FIRST COMMUNICATION CIRCUIT

314 SECOND COMMUNICATION CIRCUIT

EP 4 539 588 A1

# FIG. 6

600

```
          ┌─────────────┐
          │    START    │
          └─────────────┘
                 │
                 ▼
```

601 — SET UP MULTIPLE LINKS TO EXTERNAL ELECTRONIC DEVICE

603 — CONFIGURE ACTIVE LINK AND INACTIVE LINK

605 — PERFORM WIRELESS LAN COMMUNICATION BASED ON ACTIVE LINK

607 — IS DESIGNATED LINK SWITCHING CONDITION SATISFIED?  NO

YES

609 — IDENTIFY RADIO SIGNAL STATE OF INACTIVE LINK

611 — RECONFIGURE ACTIVE LINK AND INACTIVE LINK

613 — PERFORM WIRELESS LAN COMMUNICATION BASED ON ACTIVE LINK

```
          ┌─────────────┐
          │     END     │
          └─────────────┘
```

# FIG. 7

700

```
        ( START )
            |
            v
┌─────────────────────────────────────┐
│  PERFORM INITIAL CONFIGURATION OF    │  701
│            ACTIVE LINK               │
└─────────────────────────────────────┘
            |
            v
┌─────────────────────────────────────┐
│  IDENTIFY RADIO SIGNAL STATES OF     │  703
│          MULTIPLE LINKS              │
└─────────────────────────────────────┘
            |
            v
┌─────────────────────────────────────┐
│  CONFIGURE ACTIVE LINK AND           │  705
│         INACTIVE LINK                │
└─────────────────────────────────────┘
            |
            v
┌─────────────────────────────────────┐
│  IDENTIFY EFFECTIVE LINK IN          │  707
│          ACTIVE LINK                 │
└─────────────────────────────────────┘
            |
            v
┌─────────────────────────────────────┐
│  PERFORM WIRELESS LAN COMMUNICATION  │  709
│         VIA EFFECTIVE LINK           │
└─────────────────────────────────────┘
            |
            v
         ( END )
```

# FIG. 8

800

START

801 — IDENTIFY RADIO SIGNAL STATE OF ACTIVE LINK

803 — SWITCH SERVICE AREA? — NO

YES

805 — IDENTIFY COMMUNICATION CIRCUIT OF INACTIVE LINK

807 — IDENTIFY RADIO SIGNAL STATE OF INACTIVE LINK

809 — RECONFIGURE ACTIVE LINK AND INACTIVE LINK

811 — IDENTIFY EFFECTIVE LINK IN ACTIVE LINK

813 — PERFORM WIRELESS LAN COMMUNICATION VIA EFFECTIVE LINK

END

# FIG. 9

FIRST SERVICE AREA
(900)

SECOND SERVICE AREA
(910)

THIRD SERVICE AREA
(920)

931    933    935    937    220

EXTERNAL
ELECTRONIC
DEVICE

ELECTRONIC
DEVICE
(101)

ELECTRONIC
DEVICE
(101)

ELECTRONIC
DEVICE
(101)

ELECTRONIC
DEVICE
(101)

# FIG. 10

1000

```
                    ┌──────────────┐
                    │    START     │
                    └──────┬───────┘
                           │
1001    ┌──────────────────▼──────────────────┐
        │  IDENTIFY EFFECTIVE LINK IN ACTIVE LINK │
        └──────────────────┬──────────────────┘
                           │
1003                       ▼                    NO
        ╱─────────────────────────────────────╲────────┐
        ╲   DOES EFFECTIVE LINK EXIST?          ╱       │
         ╲───────────────────┬─────────────────╱        │
                           YES│                         │
1005                          ▼              NO         │
        ╱─────────────────────────────────────╲──────┐ │
        ╲   IS DESIGNATED DATA THROUGHPUT      ╱      │ │
        ╲        SATISFIED?                    ╱      │ │
         ╲──────────────────┬──────────────────╱      │ │
1007                    YES │                         │ │
        ┌───────────────────▼──────┐      1009  ┌─────▼─▼──────────────┐
        │ PERFORM WIRELESS LAN      │            │ SET UP COMMUNICATION  │
        │ COMMUNICATION VIA         │            │ LINK TO ANOTHER       │
        │ EFFECTIVE LINK            │            │ EXTERNAL ELECTRONIC   │
        └───────────┬───────────────┘            │ DEVICE                │
                    │                            └───────────┬───────────┘
                    ▼◄───────────────────────────────────────┘
              ┌──────────┐
              │   END    │
              └──────────┘
```

# FIG. 11

1100

START

1101
IDENTIFY EFFECTIVE LINK IN ACTIVE LINK

1103
DOES EFFECTIVE LINK EXIST? — NO

YES

1105
IS DESIGNATED DATA THROUGHPUT SATISFIED? — NO

YES

1107
IDENTIFY EFFECTIVE LINK TO BE USED IN WIRELESS LAN COMMUNICATION

1109    YES

PERFORM WIRELESS LAN COMMUNICATION VIA EFFECTIVE LINK

1111
SET UP COMMUNICATION LINK TO ANOTHER EXTERNAL ELECTRONIC DEVICE

END

## INTERNATIONAL SEARCH REPORT

International application No.

**PCT/KR2023/013942**

| A. | CLASSIFICATION OF SUBJECT MATTER |
|---|---|

**H04W 76/15**(2018.01)i; **H04W 28/02**(2009.01)i; **H04W 76/27**(2018.01)i; **H04L 43/0888**(2022.01)i; **H04W 84/12**(2009.01)i; **H04W 24/02**(2009.01)i

According to International Patent Classification (IPC) or to both national classification and IPC

| B. | FIELDS SEARCHED |
|---|---|

Minimum documentation searched (classification system followed by classification symbols)

H04W 76/15(2018.01); H04W 74/08(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 무선랜(WLAN), 복수의 링크(multi-link), TID, 링크(link), 맵핑(mapping), 활성 (enabled), 비활성(disabled)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y<br>A | MONAJEMI, Pooya et al. TID to Link Mapping for QoS. IEEE 802.11-22/1510r3. 22 September 2022.<br>    See pages 1-11. | 1-6,11,13-15<br>7-10,12 |
| Y | MONAJEMI, Pooya et al. CC36 Comment resolution for Enterprise-Grade TID Mapping. IEEE 802.11-21/1793r8. 15 May 2022.<br>    See pages 3, 8 and 43. | 1-6,11,13-15 |
| A | LU, Liuming et al. CC36 resolution to CIDs 5956 5957 for TID-to-Link Mapping. IEEE 802.11-21/2031r1. 27 February 2022.<br>    See pages 1-7. | 1-15 |
| A | CARIOU, Laurent et al. Resolutions for CC34 CIDs for MLO TID to link mapping subclause. IEEE 802.11-21/0282r10. 15 July 2021.<br>    See pages 1-14. | 1-15 |
| A | KR 10-2021-0004869 A (HYUNDAI MOTOR COMPANY et al.) 13 January 2021 (2021-01-13)<br>    See paragraphs [0117]-[0146] and figures 8-9. | 1-15 |

☐ Further documents are listed in the continuation of Box C.      ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **12 December 2023** | **12 December 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/013942**

| Patent document cited in search report | | | Publication date (day/month/year) | Patent family member(s) | | | Publication date (day/month/year) |
|---|---|---|---|---|---|---|---|
| KR | 10-2021-0004869 | A | 13 January 2021 | US | 2022-0279375 | A1 | 01 September 2022 |
| | | | | WO | 2021-006545 | A1 | 14 January 2021 |

Form PCT/ISA/210 (patent family annex) (July 2022)